# EUROPÄISCHE PATENTSCHRIFT

(11) **EP 1 447 162 B1**
(45) Veröffentlichungstag und Bekanntmachung des Hinweises auf die Patenterteilung: **21.09.2005**
(21) Anmeldenummer: 04001523.2
(22) Anmeldetag: 06.02.2004
(51) Int. Cl.: B23B 27/16

(54) **Vorrichtung mit Doppelkeil**
Device with double wedge
Appareil avec clavette double

(30) Priorität: 07.02.2003 DE 20301942 U; 28.03.2003 DE 20305081 U
(43) Veröffentlichungstag der Anmeldung: 18.08.2004
(73) Patentinhaber: Gühring, Jörg, Dr., 72458 Albstadt (DE)
(72) Erfinder: Matheis, Klaus, 88605 Sauldorf-Rast (DE)
(74) Vertreter: Angermeier, Simon Andreas

(56) Entgegenhaltungen:
- DE-A- 2 615 913
- DE-A- 10 108 103
- FR-A- 2 651 703
- GB-A- 210 917
- US-A- 3 088 141
- US-A- 3 662 444
- US-A- 4 592 680
- US-A- 5 709 510
- US-A- 5 863 156

## Beschreibung

Die Erfindung betrifft eine Spann- und Justiervorrichtung für ein Zerspanungswerkzeug gemäß dem Oberbegriff des Anspruchs 1 sowie ein Zerspanungswerkzeug gemäß dem Oberbegriff des Anspruchs 20 und eine Werkzeugkassette für ein Zerspanungswerkzeug gemäß dem Oberbegriff des Anspruchs 27.

Bei gattungsgemäßen Werkzeugen befinden sich die Schneiden nicht direkt am Werkzeug selbst, sondern auf entsprechenden Schneideinsätzen, insbesondere Wechselplatten, die mit dem Werkzeug verschraubt sind. Auch Schneidenträger wie beispielsweise Kassetten, die am Werkzeug befestigt werden und entsprechende Schneidplatten tragen sind bekannt.

Durch den Einsatz derartiger Schneidplatten erfolgt eine Entkopplung des Materials des Werkzeugs vom Material an den Schneiden, die dazu führt, dass für die Schneidplatte bestimmte, teure und harte Schneidstoffe wie z.B. Cermet u.ä. oder Beschichtungen wie z.B. Diamant eingesetzt werden können, während der Werkzeugschaft aus einem duktilen, weniger teueren Material gefertigt werden kann. Dabei stellt sich die Frage nach einer Feineinstellung der axialen oder radialen Lage der Schneidkante(n) der Schneidplatte bezüglich der Werkzeugachse, um einerseits durch größere Fertigungstoleranzen bei der Schneidplattenfertigung Kosteneffekte -zu erzielen und andererseits den Verschleiß an den Schneidkanten während des Einsatzes sowie - zumindest in geringem Maße - sonstige Meß- oder Justierungenauigkeiten ausgleichen zu können.

Dazu ist in der Patentschrift DE 1 752 151 schon eine Einmesserreibahle mit auswechselbarem Messer vorgeschlagen worden, bei der über eine Justierschraube ein Stellkeil angetrieben wird, um so auf die Seitenfläche eines Schneidmessers zu drücken, dass dieses in seiner radialen Lage verstellbar ist. Das Messer wird dabei mittels Klemmschrauben in seiner ungefähren Lage eingeklemmt, während die Feinnjustage über die Justierschraube und den Stellkeil erfolgt. Dabei erstrecken sich Justier- und Klemmschrauben radial durch den gesamten Werkzeugkörper hindurch.

Ferner ist aus der US-Schrift US-3,662,444 ein Fräser bekannt, dessen Schneidplatten mittels Schrauben gegen einen Plattensitz gespannt werden, wobei dadurch, dass die Gewindebohrung unter dem Plattensitz nicht im 90°-Winkel zur Auflagefläche verläuft, sondern unter einem gewissen Winkelversatz, eine Anpresskraft in Richtung auf die radial innenliegende Seitenwand am Plattensitz wirkt, wodurch die Platte gegen die Seitenwand vorgespannt wird. In Radialrichtung stützt sich die Platte dabei an einer Führungsfläche ab. Dabei wird die radial innenliegende Seitenwand von einem antreibbaren Stellkeil gebildet, der mit seiner Keilfläche gegen die Platte drückt, wodurch die radiale Lage der Platte feineingestellt werden kann. Der Stellkeil ist dabei als Hülse ausgebildet. Der Antrieb der Stellkeilhülse erfolgt über eine Differentialschraube, mit der die Stellkeilhülse im wesentlichen axial mit dem Werkzeug verschraubt wird, so dass bei Anziehen der Schraube die Keilfläche des Stellkeil gegen die Platte drückt und diese unter entsprechender Durchbiegung der Plattenverschraubung radial nach außen drängt.

Die DE 101 08 103 A1 zeigt und beschreibt eine Spann- und Justiervorrichtung gemäß dem Oberbegriff des Anspruchs 1. Dargestellt wird im Besonderen eine Bohrstange mit einem Grundkörper, mindestens einem in den Grundkörper außerhalb der Drehachse eingeformten Plattensitz und mindestens einer Schneidplatte. Die Schneidplatte liegt mit zwei einen Winkel miteinander einschließenden Plattenkanten gegen je eine Kantenstützfläche und mit ihrem Boden gegen eine Bodenstützfläche des Plattensitzes an. Sie steht mit einer eine wirksame Schneide aufweisenden dritten Plattenkante frei über den Grundkörper über und ist mittels einer Kopfschraube am Grundkörper festlegbar. Um mit einfachen Mitteln eine exakte Einstellung des Borradius zu ermöglichen, ist eine der beiden Kantenstützflächen als an einem gegenüber dem Grundkörper längs einer Verschiebeachse verschiebbaren Stellkörper angeordnete, mit der Verschiebeachse einen spitzen Winkel einschließende Keilfläche ausgebildet, gegen die die Schneidplatte mit ihrer der wirksamen Schneide gegenüberliegenden, parallel zur Keilfläche ausgerichteten Plattenkante anliegt. Die andere Kantenstützfläche ist vorzugsweise unmittelbar in den Grundkörper eingeformt und senkrecht zur Verschiebeachse des Stellkörpers ausgerichtet.

Aus der US 3,088,141 ist ein Schneidwerkzeug mit einem Schneidenträger, einem am Schneidenträger verstellbar gelagerten Schneideinsatz und einer den Schneideinsatz beaufschlagenden Justiervorrichtung bekannt. Die Justiervorrichtung besteht aus einem im Schneidenträger axial verschiebbaren Stift mit stirnseitig vorgesehenen Kegelflächen sowie einer radial im Schneidenträger angeordneten Druckschraube.

Weitere Spann- bzw. Justiervorrichtungen zum Spannen und Feinjustieren von Schneideinsätzen in Zerspanungswerkzeugen sind zudem beispielsweise in den Schriften DE 197 25 219 A1, DE 195 21 599 A1, US-6155753, US-3339257, US-3195376, DE-4403188, DE-2806079, DE 2 015 313 A1, US 4,592,680 und JP-10277839 offenbart worden.

Ausgehend von der DE 101 08 103 A1 ist es Aufgabe der Erfindung, eine Spann- und Justiervorrichtung für ein gattungsgemäßes Werkzeug zu schaffen, die bei geringem Platzbedarf eine genaue Justage zulässt. Des Weiteren stellt sich die Aufgabe, ein gattungsgemäßes Werkzeug sowie eine entsprechende Werkzeugkasstte derart weiterzubilden, dass mit verringerter Belastung an der Befestigung des Schneideinsatzes ein größerer Feinjustierbereich erreicht werden kann.

Diese Aufgabe wird hinsichtlich der Spann- und Justiervorrichtung mit den Merkmalen des Anspruchs 1 gelöst, hinsichtlich des Werkzeugs mit den Merkmalen des Anspruchs 20 und hinsichtlich der Werkzeugkassette mit den Merkmalen des Anspruchs 27.

Um Schneideinsätze an entsprechenden Schneideinsatzsitzen auf Zerspanungswerkzeugen, wie beispielsweise Bohrer, Stufenbohrer, Reibahlen, Stirnplanfräser etc., maßgenau einzuspannen, werden die Schneideinsätze mit einer Vorspann- und Fixiereinrichtung gegen eine Sitzfläche vorgespannt, wobei die Vorspannung so erfolgt, dass sich die Schneideinsätze lagefixiert am jeweiligen . Schneidenträger abstützen. Beispielsweise wird eine Wechselschneidplatte mit einer Spannschraube an einem entspechendem Werkzeugträger verschraubt, wobei die Gewindebohrung unter der Schneidplatte zur Durchgangsbohrung durch die Schneidplatte leicht zu den Seiteneinfassungen des Schneidplattensitzes hin verschoben ist, so dass die Schneidplatte beim Einschrauben der Spannschraube nicht nur gegen die Sitzfläche des Schneidplattensitzes, sondern auch mit ihren Seitenwänden gegen die Seiteneinfassungen des Schneidplattensitzes gedrückt wird. Die Schneidplatte ist somit lagefixiert am Schneidenträger befestigt.

Aufgrund von Fertigungstoleranzen beim Schneidenträger ebenso wie bei der Schneidplatte, Abnutzung während des Betriebs etc. ist es dabei insbesondere bei Feinbearbeitungswerkzeugen nötig, dass die Schneidplatte genau auf Nennmaß nachgestellt werden kann. Erfindungsgemäß wird als Spann- und Justiervorrichtung für derartige Schneideinsätze ein Verstellkeil vorgeschlagen, der im Schneidenträger formschlüssig und verschiebbar aufgenommen ist und über den sich der Schneideinsatz abstützt. Der Verstellkeil ist dabei mittels einer Druckschraube in einer im Wesentlichen parallel zur Sitzfläche verlaufenden Richtung antreibbar.

Durch die parallel zur Sitzfläche vorgesehene Antriebs- bzw. Verstellrichtung des Verstellkeils gelingt eine Platz sparende Anordnung, so dass die erfindungsgemäße Spann- und Justiervorrichtung auch bei kleinen Werkzeugdurchmesser oder an der Stufe von Stufenwerkzeugen einsetzbar ist. Darüber hinaus kann bei der Anordnung des Verstellkeils in einer im Wesentlichen parallel zur Sitzfläche verlaufenden Richtung bei einem plattenförmigen Schneideinsatz eine sehr feine Dosierung der mittels einer Druckschraube auf den Verstellkeil ausgeübten und von diesem auf die Schneidplatte und damit auf die Vorspanneinrichtung der Schneidplatte übertragenen Verstellkraft erzielt werden. Dadurch kann die Justierung der Schneidplatte unter engsten Toleranzen erfolgen.

Nach erfolgter Justierung der Schneidplatte auf ihr Maß - die Justierung kann dabei je nach Einsatzzweck sowohl in axialer als auch in radialer Werkzeugrichtung erfolgen - wird die Schneidplatte bzw. der plattenförmige Schneideinsatz mittels der Vorspann- und Fixiervorrichtung in ihrer endgültigen Lage fixiert. Vorteilhaft weist die Vorspann- und Fixiervorrichtung dabei einen Spannkopf auf, mit dem ein erster Seitenwandabschnitt des Schneideinsatzes beim Vorspannen oder Fixieren gegen eine Verstellkeilfläche des Verstellkeils gedrückt wird. Beispielsweise wird eine unter Vorspannung stehende Spannschraube in denm obenstehend genannten versetzten Gewinde festgezogen. Es wäre jedoch auch ein Spannkopf mit einem Schraubenkopf denkbar, der eine entsprechende Nocke aufweist, mit der der Druck auf den Schneideinsatz aufgebracht wird. Auf diese Weise ist eine passgenaue und flächige Anlage des Verstellkeils an der Seitenwand des Schneideinsatzes gewährleistet.

In der vorteilhaften Ausführungsform nach Anspruch 3 weist der Schneidenträger darüber hinaus eine Führungsanschlagsanordnung auf, an der ein weiterer Seitenwandabschnitt des Schneideinsatzes zu liegen kommt. Die Vorspann- und Fixiervorrichtung ist dabei so ausgebildet, dass der Schneideinsatz mit seinem zweiten Seitenwandabschnitt gegen die Führungsanschlagsanordnung gedrückt wird, wenn er vorgespannt und fixiert wird. Die Führungsanschlagsanordnung ist dabei bevorzugt als Führungsfläche ausgebildet. Insgesamt gelingt so eine vollständig bestimmte Lagerung des Schneideinsatzes, der mit seiner Bodenfläche auf der Sitzfläche aufliegt, mit einer ersten Seitenwand bzw. einem ersten Seitenwandabschnitt an der Verstellkeilfläche und mit einer dazu im Winkel ausgebildeten zweiten Seitenwand bzw. einem zweiten Seitenwandabschnitt an der Führungsanschlagsanordnung bzw. an der Führungsfläche. Dabei tritt ein weiterer Vorteil der erfindungsgemäß parallel zur Sitzfläche verlaufenden Verstellrichtung des Verstellkeils zutage: Durch Verstellen des Verstellkeils in Richtung auf die Schneidplatte zu, entsteht an der Keilfläche des Verstellkeils eine Kraft senkrecht zur Keilfläche, d. h. in Richtung senkrecht zur ersten Seitenwand der Schneidplatte. Daneben entsteht aufgrund von Reibung aber auch eine Kraft in Verstellrichtung, d. h. entlang der Keilfläche und damit auf die zweite Seitenwand der Schneidplatte zu. Auf diese Weise gelingt nicht nur eine Verschiebung der Schneidplatte unter Einwirkung der senkrecht auf die erste Seitenfläche wirkenden Kraft, sondern auch eine zusätzliche Anpressung der Schneidplatte an der Führungsfläche, insbesondere bei im Wesentlichen rechteckigen oder rautenförmigen Schneidplatten.

Bei erfindungsgemäßer Anordung des Verstellkeils läuft der Verstellkeil zudem entlang der Längsrichtung der entsprechenden Seitenfläche bzw. Seitenwand der Schneidplatte, so dass die Seite, an der die Druckkraft der Druckschraube in den Verstellkeil eingeleitet wird relativ klein sein kann und somit ein hoher Druck auf die Fläche und damit eine hoch konzentrierte und damit biege- und torsionsfreie Krafteinleitung in den Verstellkeil erfolgen kann. Der Stellkeil verläuft hinter der ersten Seitenwand des Schneideinsatzes flach und erlaubt trotz der Platz sparenden Bauweise eine hohe Kraftübertragung auf die Schneidplatte.

Eine besonders schlanke Bauweise lässt sich mit kleinen Keilwinkeln zwischen Antriebsrichtung des Verstellkeils und der Verstellkeilfläche erzielen. Auf diese Weise gelingt zudem eine Untersetzung der Stellkeilbewegung auf die Schneidplatte, so dass sich die Verstellung der Schneidplatte genau dosieren lässt. Als besonders geeignet haben sich dabei Keilwinkel zwischen 5° und 25° herausgestellt, insbesondere zwischen 5° und 15°.

Die erfindungsgemäße Spann- und Justiervorrichtung kann dabei bei Stirnplanfräsern oder anderen Werkzeugen, bei denen die Schneidplatten flächig an einer Stirnfläche angeordnet sind, eingesetzt werden. Besonders vorteilhaft ist sie jedoch bei Werkzeugen, wie beispielsweise Bohrern oder Reibahlen einsetzbar, bei denen die Schneidplatte bzw. die Schneidplatten flächig in einer Ebene senkrecht zur Stirnfläche des Werkzeugs angeordnet sind. Dabei kann der entlang der Längsrichtung der Seitenwand der Schneidplatte wirkende, schlanke Verstellkeil im Wesentlichen in Axialrichtung angeordnet sein, so dass sich in Radialrichtung des Werkzeugs ebenso wie in Umfangsrichtung des Werkzeugs ein Platz sparender Aufbau der Spann- und Justiervorrichtung ergibt, wohingegen in Axialrichtung genügend Raum zur Aufnahme des Verstellkeils zur Verfügung steht.

Die Druckschraube zum Antrieb des Verstellkeils ist im Winkel zum Verstellkeil angeordnet und drückt über einen Antriebskeil auf den Verstellkeil. Auf diese Weise kann die Druckschraube auch leicht zugänglich umfangsseitig oder von der Spannut aus in das Werkzeug eingeschraubt werden. Die erfindungsgemäße Spann- und Justiervorrichtung lässt sich somit auch bei Werkzeugen einsetzen, bei denen ein stirn- oder bodenseitiges Anbringen der Druckschraube unmöglich ist.

Bevorzugt ist dabei die Druckschraube in einer vom Außenumfang des Werkzeugs ausgehenden Radialbohrung aufgenommen, so dass die im Wesentlichen axiale Verstellrichtung des Verstell- und des Antriebskeils senkrecht zur Schraubenachse der Druckschraube verläuft. Je nach Platzverhältnissen, Form der Schneidplatte, der Spannut oder des Schneidenträgers kann jedoch eine alternative Konfiguration gewählt werden.

Verstell- und Antriebskeil sind an einem einstückigen Doppelkeilstift ausgebildet. Auf diese Weise ist eine sichere Kraftübertragung von der Druckschraube über den Doppelkeilstift auf die Schneidplatte und die Schneidplattenspannschraube sichergestellt. Der Doppelkeilstift kann in einer gemeinsamen Führung aufgenommen sein, beispielsweise einer Sacklochbohrung oder einer eingefrästen Nut, die vorteilhaft im Wesentlichen in Axialrichtung verläuft, während die Druckschraube in einer Gewindebohrung aufgenommen ist, die vorteilhaft im Wesentlichen in Radialrichtung verläuft.

Dabei können am einstückigen Doppelkeilstift je nach Form der Schneidplatte, die vom Verstellkeil lageverstellt wird, und des Wirkmechanismus, über den die Druckschraube auf den Antriebskeil wirkt, verschiedenartig ausgeformte Ausnehmungen vorgesehen sein. Insbesondere bei einer einzustellenden Schneidplatte bietet sich dabei eine Ausgestaltung des Verstellkeils durch eine keilförmige Ausnahme am Doppelkeil an, da auf diese Weise eine flächige Anlage des Verstellkeils an der Schneidplatte und damit eine gute Kraftübertragung ergibt.

Hinsichtlich des Antriebskeils kommen verschiedene Ausgestaltungen in Frage: Beispielsweise ist der Antriebskeil bei der vorteilhaften Ausführungsform nach Anspruch 9 direkt unter der Stirnfläche der Druckschraube angeordnet, welche stirnseitig einen Konus aufweist, d.h. eine kegelmantelflächige Druckfläche, über die die Kraftübertragung auf den Antriebskeil erfolgt. In diesem Fall kann die für den Antriebskeil am Doppelkeilstift vorgesehene Ausnehmung ebenfalls konisch ausgebildet sein. Eine derartige konische Ausnehmung lässt sich auf einfache Weise erzeugen, indem mit einem Bohrwerkzeug mit einem dem gewünschten Konuswinkel entsprechenden Spitzenwinkel auf die gewünschte Tiefe in den Doppelkeilstift eingebohrt wird; vorzugsweise ist der Spitzenwinkel bzw. der Konuswinkel der den Antriebskeil bildenden Ausnehmung dabei gleich dem Konuswinkel der Kegelmantel-Druckfläche auf der Stirnseite der Druckschraube gewählt, da sich auf diese weise eine linienförmige, sich über die gesamte Länge von der Spitze der Druckschraube bis zum Schraubenumfang erstreckende Anlage der Druckfläche am Antriebskeil ergibt.

Die Druckschraube kann dabei einstückig als Madenschraube in den Werkzeugkörper bzw. Schneidenträger einschraubbar ausgebildet sein.

Es wäre aber auch denkbar, die Druckfläche kugelig auszuformen. Insbesondere könnte in diesem Fall durch eine entsprechende Krümmung der Antriebskeilausnehmung erreicht werden, dass die Verstellbewegung des Doppelkeilstiftes zuerst langsam unter einem geringen Widerstand und dann schnell unter einem größerem Widerstand erfolgt oder zuerst schnell unter einem größeren Widerstand und dann langsamer unter einem kleineren Widerstand. Ebenfalls denkbar wäre eine Ausgestaltung des Antriebskeils gemäß Anspruch 7 als keilförmige Ausnehmung; auch in diesem Fall kann eine linienförmige Auflagefläche einer kegelmantelförmigen Druckfläche der Druckschraube bewirkt werden.

Die Ausgestaltung des Antriebskeils als keilförmige Ausnehmung bewährt sich jedoch besonders im Zusammenspiel mit der vorteilhaften Ausführungsform nach Anspruch 11, bei der die Druckschraube nicht direkt auf den Antreibskeil gedrückt wird, sondern über einen zwischengeschalteten Druckkeil. Auf diese Weise wird eine vollflächige Anlage der gesamten, zur Achse der Druckschraube schräg verlaufenden Druckfläche des Druckkeils am Antriebskeil bewirkt.

Die Druckschraube kann dabei als Madenschraube in den Werkzeugkörper bzw. Schneidenträger einschraubbar ausgebildet sein und auf den koaxial in der Bohrung geführten Druckbolzen drücken.

Im Sinne einer feingängigen bzw. präzisen Einstellung der Lage der Schneidplatte ist es darüber hinaus vorteilhaft, wenn der Verstellkeilwinkel kleiner als der Antriebskeilwinkel ist, so dass die Radialbewegung der Druckschraube, d. h. die Spiralbewegung beim Einschrauben der Druckschraube nur unterproportional in eine radiale Auslenkung der Schneidplatte übersetzt wird. Als vorteilhaft haben sich dabei insbesondere Verstellkeilwinkel von 5° bis 25° erwiesen sowie Antriebskeilwinkel zwischen 30° und 40°

In der vorteilhaften Ausführungsform gemäß Anspruch 10 sind die Antriebskeilfläche und die Verstellkeilfläche konkav am Doppelkeilstift vorgesehen. Auf diese Weise bildet die Druckschraube eine Verliersicherung für den Doppelkeilstift, die einem Herausfallen des Doppelkeilstifts aus seiner Führung bei Ausbau der Schneidplatte entgegenwirkt. Der über die Druckschraube ausgeübte Druck wird dabei in eine Zugbewegung am Doppelkeilstift übersetzt. Die an der Verstellkeilfläche anliegende Seitenwand der Schneidplatte steht dabei im Keilwinkel zur Verschieberichtung des Doppelkeils, so dass die auf diese Seitenwand übertragene Kraft die Schneidplatte gleichtzeitig radial nach Außen und gegen die Führungsfläche drängt. Mit einem solchen Doppelkeilstift gelingt insbesondere eine Radialverstellung von Schneidplatten, bei denen die am Verstellkeil anliegende Seitenwand in Richtung der Ziehbewegung des Doppelkeils im Keilwinkel des Verstellkeils geneigt ist, beispielsweise bei rautenförmigen Standardwendeplatten die so am Schneidenträger vorgesehen sind, dass eine der spitzen Ecken von der Verstellkeilfläche und der Führungsfläche am Schneidplattensitz umgeben ist.

Bei Schneidplatten, die keine oder eine gegensinnige Neigung der am Verstellkeil anliegenden Seitenwand bezüglich der Richtung der erwünschten Schneidenverstellung aufweisen, ist dagegen eine konvexe Anordnung des Verstell- und des Antriebskeils auf dem Doppelkeilstift vorteilhaft. Der von der Druckschraube ausgeübte Druck führt dabei zu einer Verschiebung des Verstellkeils in der durch die Keilaufnahme vorgegebene Verschieberichtung und somit zu einem Druck gegen die Wand der Schneidplatte, so dass wiederum eine radiale Auslenkung der Schneidplatte erfolgt.

Insbesondere bei einem Doppelkeilstift mit konkav angeordneten Keilflächen ist es dabei vorteilhaft, wenn eine Auswurffeder vorgesehen ist, die bei Zerlegung des Werkzeugs einen unproblematischen Ausbau des Doppelkeilstifts ermöglicht.

Ein weiterer Aspekt der Erfindung betrifft ein Werkzeug, bei dem zum Vorspannen und Fixieren der Schneidplatte eine Spannschraube verwendet wird. Bei der erfindungsgemäßen Verstellvorrichtung ebenso wie bei bekannten Verstellvorrichtungen entsteht durch die bei der Justierung der Schneidplatte erfolgende Auslenkung eine Kraft, die quer zur Schraubenachse der Spannschraube in den Spannkopf der Spannschraube eingeleitet wird. Neben dem durch das Vorspannen der Schneidplatte hervorgerufenen Biegemoment tritt somit eine zusätzliche Biegebelastung der Spannschraube auf, wodurch der Einstellbereich der Spann- und Justiervorrichtung begrenzt wird. Erfindungsgemäß ist die Spannschraube durch eine Durchgangsbohrung hindurch mit einem in einer Mutterteilführungsaufnahme beweglich gelagerten Mutterteil verschraubt, wobei der Freiheitsgrad der Bewegung des Mutterteils in der Mutterteilführungsaufnahme eine Komponente senkrecht zum ersten Seitenwandabschnitt aufweist. Die in den Spannkopf der Spannschraube eingeleitete Querkraft kann somit teilweise in eine Ausgleichsbewegung des Mutterteils umgelenkt werden. Die Durchbiegung der Spannschraube wird dadurch verringert und die Krafteinleitung der auf die Spannschraube übertragenen Kraft auf eine größere Fläche verteilt. Es gelingt somit, den Justierbereich, innerhalb dem die Lage der Schneidplatte einstellbar ist, zu vergrößern.

In einer vorteilhaften Ausführungsform ist das Mutterteil als Zylinderbolzen mit einer umfangsseitigen Gewindebohrung zur Aufnahme der Spannschraube ausgeführt, der in einer im Mutterteilführungsrichtung vom Außenumfang des Schneidenträgers her eingebohrten Bohrung verschiebbar gelagert ist.

Bei Schneideinsätzen, die sich wie oben stehend erläutert, an einem zweiten Seitenwandabschnitt im Winkel zum ersten Seitenwandabschnitt an einer Führungsfläche abstützen, ist es außerdem vorteilhaft, wenn die Führungsrichtung der Mutterteilaufnahme eine Komponente in Richtung des zweiten Seitenwandabschnitts aufweist, so dass sich die Mutterteilführungsaufnahme in Richtung der in die Spannschraube eingeleiteten Querkraft erstreckt. Auch bei einer alternativ zur Führungsfläche vorgesehenen zweiten Justiereinrichtung - beispielsweise zur gleichzeitigen axialen und radialen Schneidenlagejustage ist eine derartige Ausgestaltung der Mutterteilführungsaufnahme bzw. des Mutterteils sinnvoll.

Es hat sich gezeigt, dass es darüber hinaus vorteilhaft ist, wenn die Führungsrichtung der Mutterteilführungsaufnahme eine Komponente in Richtung der Achse der Spannschraube aufweist, da auf diese Weise nicht nur eine gute Klemmwirkung der Spannschraube erzielt werden kann sondern gleichzeitig auch der Einstellbereich der Spann- und Justiervorrichtung groß ist. Besonders vorteilhaft hat sich dabei ein Verhältnis der Komponente in Richtung der Achse der Spannschraube zu den restlichen Komponenten der Führungsrichtung von 10 bis 50 %, insbesondere 20 bis 35 % beispielsweise 25 bis 30 % erwiesen.

Die erfindungsgemäße Spann- und Justiervorrichtung und die Verspannung der Spannschraube mit dem erfindungsgemäßen Mutterteil ergänzen sich dabei auf besonders vorteilhafte Weise, da in dem durch die Mutterteilverschraubung erzielten großen Verstelllbereich die durch die Spann- und Justiervorrichtung ermöglichte Feineinstellung vorgenommen werden kann.

Die Erfindung kann insbesondere zur Schneidenjustage an der Stufe eines Stufenwerkzeugs vorteilhaft eingesetzt werden, bei dem es auf eine in Radialrichtung schlank bauende Spann- und Justiervorrichtung ankommt und bei dem im Schneidenträger eine zentrale Aufnahme zum Einspannen von Einsatzwerkzeugen für die Vorbohrstufe erforderlich ist, die den zur Verfügung stehenden Bauraum einschränkt.

Insbesondere bei derartigen Stufenwerkzeugen werden auch Werkzeugkassetten eingesetzt, die als eigenständiger Schneidenträger entsprechende Schneideinsätze oder Schneidplatten aufnehmen und am Werkzeuggrundkörper bzw. -träger befestigbar sind. Auch bei derartigen Werkzeugkassetten kann die erfindungsgemäße Spann- und Justiervorrichtung vorteilhaft eingesetzt werden.

Dabei wäre es denkbar, den Verstellkeil am Werkzeuggrundkörper vorzusehen und somit die gesamte Werkzeugkassette in ihrer Lage bezüglich des Werkzeuggrundkörpers zu justieren. Vorteilhaft ist die Werkzeugkassette jedoch lagefest am Werkzeuggrundkörper befestigbar und weist einen Verstellkeil auf, mit dem die Lage der Schneidplatte auf der Werkzeugkassette verstellt werden kann. Der Werkzeuggrundkörper kann somit einen einfachen Aufbau aufweisen, wobei die gesamte Verstellmechanik auf der Werkzeugkassette untergebracht ist. Die Werkzeugkassette kann wiederum über eine Spannschraube auf dem Werkzeug bzw. dem Werkzeuggrundkörper lagefixiert werden.

Weitere vorteilhafte Ausführungsformen sind Gegenstand der weiteren Unteransprüche.

Nachfolgend werden anhand anliegender Zeichnungen bevorzugte Ausführungsformen der Erfindung näher erläutert. Es zeigen:
Fig. 1 eine isometrische Ansicht ein Werkzeug gemäß einer Ausführungsform der Erfindung;
Fig. 2 eine Seitenansicht des in Fig. 1 dargestellten Werkzeugs;
Fig. 3 eine Schnittansicht in der in Fig. 2 eingezeichneten Ebene III-III;
Fig. 4 eine Schnittansicht in der in Fig. 2 eingezeichneten Ebene IV-IV ;
Fig. 5 eine Draufsicht in Richtung des in Fig. 2 eingezeichneten Pfeils V;
Fig. 6 eine isometrische Detailansicht der in den Fig. 1 bis 5 gezeigten Spann- und Justiervorrichtung;
Fig. 7 eine Draufsicht auf die in Fig. 6 gezeigte Spann- und Justiervorrichtung;
Fig. 8 eine der Fig. 1 entsprechende Ansicht eines Werkzeugs gemäß einer weiteren Ausführungsform der Erfindung;
Fig. 9 eine der Fig. 2 entprechende Ansicht dieses Werkzeugs;
Fig. 10 eine Draufsicht in Richtung des in Fig. 9 eingezeichneten Pfeils X;
Fig. 11 eine der Fig. 6 entsprechende Detailansicht der in den Fig. 8 bis 10 gezeigten Spann- und Justiervorrichtung;
Fig. 12 eine Schnittansicht in der in Fig. 9 eingezeichneten Ebene XII-XII;
Fig. 13 eine der Fig. 1 entsprechende Ansicht eines Werkzeugs gemäß einer weiteren Ausführungsform der Erfindung;
Fig. 14 eine der Fig. 5 entsprechende Draufsicht auf dieses Werkzeug;
Fig. 15 eine Schnittansicht in der in Fig. 14 eingezeichneteten Ebene XV-XV;
Fig. 16 eine der Fig. 5 entsprechende Draufsicht auf ein Werkzeug gemäß einer weiteren Ausführungsform der Erfindung;
Fig. 17 eine der Fig. 6 entsprechende Detailansicht;
Fig. 18 eine der Fig. 7 entsprechende Draufsicht;
Fig. 19 eine der Fig. 1 entsprechende Detailansicht einer weiteren Ausführungsform der Erfindung;
Fig. 20 eine der Fig. 2 entsprechende Seitenansicht;
Fig. 21 eine Schnittansicht in der in Fig. 20 eingezeichneten Ebene XX-XX;
Fig. 22 eine der Fig. 5 entsprechende Draufsicht;
Fig. 23 eine Schnittansicht in der in Fig. 22 eingezeichneten Ebene XXII-XXII;
Fig. 24 eine der Fig. 6 entsprechende Detailansicht;
Fig. 25 eine isometrische Ansicht einer Ausführungsform einer erfindungsgemäßen Werkzeugkassette;
Fig. 26 eine Bodenansicht der Werkzeugkassette;
Fig. 27 eine Seitenansicht der Werkzeugkassette;
Fig. 28 eine Draufsicht auf die Werkzeugkassette; und
Fig. 29 eine weitere Seitenansicht der Werkzeugkassette im eingebauten Zustand;
Fig. 30 eine der Fig. 6 entsprechende Detailansicht einer weiteren Ausführungsform der Erfindung;
Fig. 31 eine der Fig. 7 entsprechende Detailansicht.

Bei der folgenden Beschreibung bevorzugter Ausführungsformen der Erfindung wurden funktional gleiche oder ähnliche Merkmale in den gezeigten Ausführungsformen mit ähnlichen Bezugszeichen versehen, um eine größere Übersichtlichkeit zu gewährleisten. Um Wiederholungen zu vermeiden werden Merkmale von Ausführungsformen, die gleich denjenigen in den vorhergehenden Ausführungsformen sind, in den Figuren teilweise nicht erneut bezeichnet.

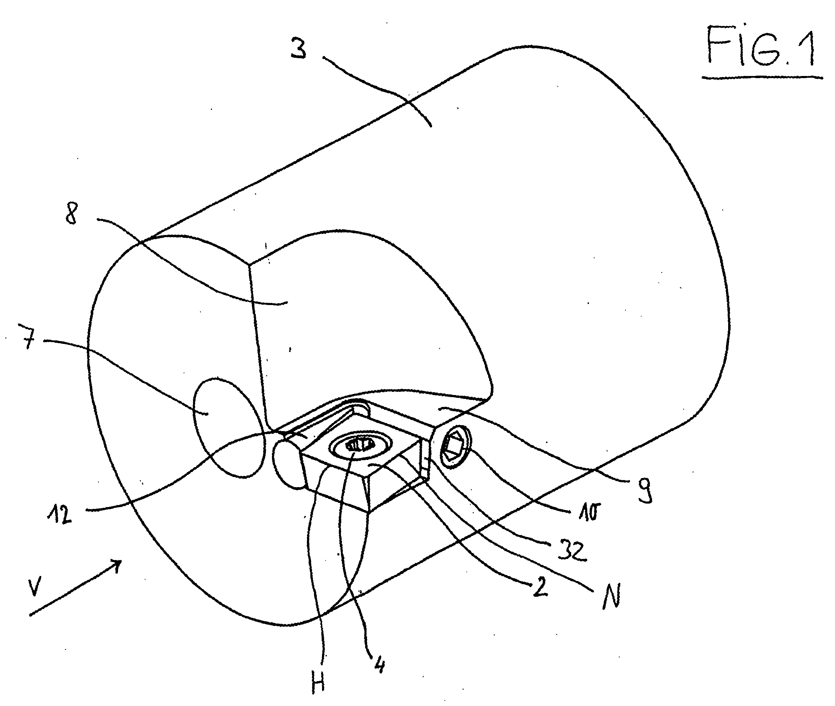

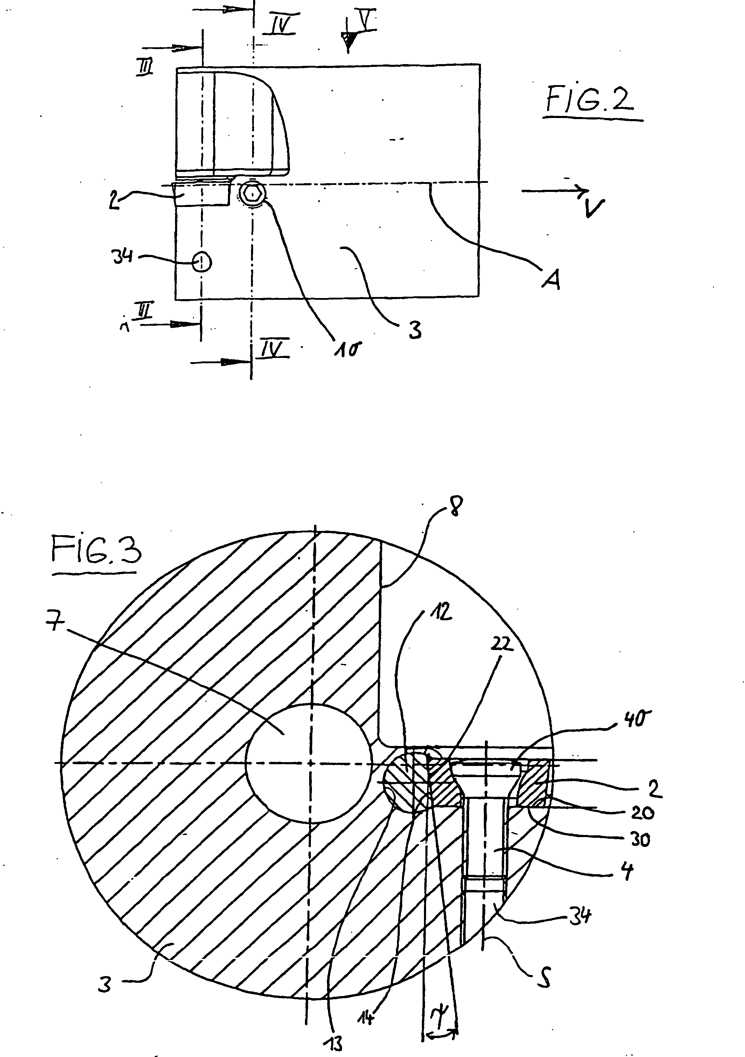

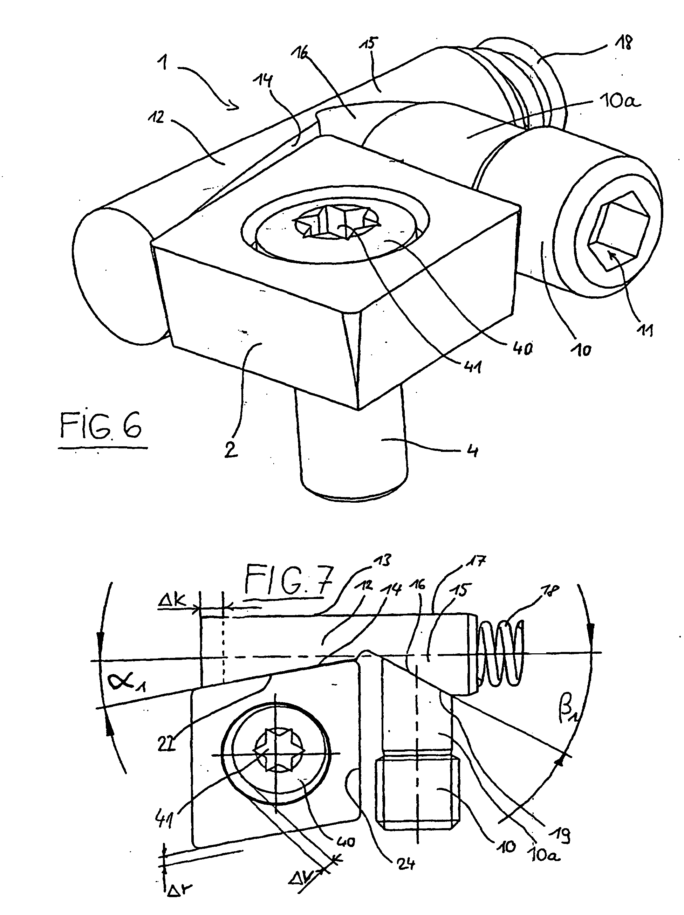

Zunächst wird bezug genommen auf die in den Fig. 1 gezeigte Ausführungsform der Erfindung, wobei weitere Einzelheiten den Figuren 2 bis 7 zu entnehmen sind.

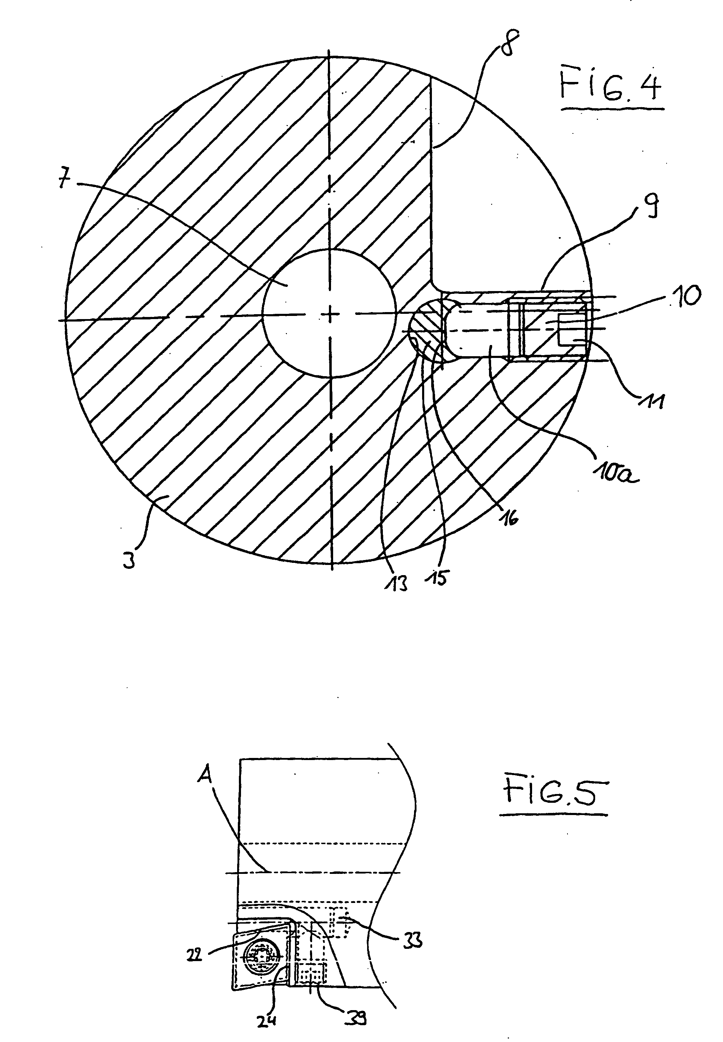

In Figur 1 ist der Schneidenträger eines Werkzeugs mit 3 bezeichnet, das einen Schneidplattensitz aufweist, an dem eine Schneidplatte 2 mit einer Spannschraube 4 verschraubt ist. Die Spannschraube 4 ist dabei zentrisch durch die Schneidplatte 2 verschraubt. Der Verstellkeil 12 ist über eine Druckschraube 10 in einer Verschieberichtung V verstellbar und stützt sich am Schneidenträger 3 ab. Figur 2 zeigt den Schneidenträger 3 in einer Seitenansicht. Die Schneidenträgerachse ist mit A bezeichnet und die Verschieberichtung des Verstellkeils mit V. Es ist zu erkennen, dass die Verschieberichtung V koaxial zur Werkzeugachse A verläuft. Unterhalb der Schneidplatte 2 ist die Austrittsöffnung einer Durchgangsbohrung 34 ersichtlich, durch die die Schraube 4 verläuft, wie in der Schnittansicht in Figur 3 dargestellt. Axial hinter der Schneidplatte 2 befindet sich die in radialer Richtung verlaufende Druckschraube 10, wie in der Schnittansicht der Figur 4 dargestellt.

Die Schneidplatte 2 ist dabei rautenförmig und so angeordnet, dass sie eine im Wesentlichen radial zur Werkzeugachse verlaufende Hauptschneide H aufweist und eine unter einer Verjüngung axial zur Werkzeugachse verlaufende Nebenschneide N. Eine Seitenfläche 22 der Schneidplatte 2 liegt an einem Verstellkeil 12 an und eine zweite Seitenfläche 24 an einer Führungsfläche 32, so dass eine ihrer spitzen Ecken von dem Verstellkeil 12 und der Führungsfläche 32 eingefasst ist.

Die Schneidplatte 2 sitzt dabei in einer Ausnehmung am Umfang des Werkzeugs 3, die die Spannut bildet, wobei die Schneidplatte 2 zusammen mit einer Fläche 9 die Spanfläche bildet und eine Fläche 8 die Spanfreifläche. Die Fläche 8 und die Fläche 9 sowie der Sitz der Schneidplatte 2 sind dabei vorzugsweise mit einer Hartstoffschicht versehen, um einen vorzeitigen Verschleiß zu verhindern.

Der Verstellkeil 12 besteht dabei aus einem Hartmetall, das vorzugsweise ebenfalls mit einer Hartstoffschicht versehen ist. Jedoch wären auch andere gängige Werkstoffe denkbar Neben dem Verstellkeil kann dabei auch der Schneidenträger 3 aus einem Hartmetall bestehen. Als Werkstoff für den Schneidenträger 3 oder den Verstellkeil 12 wäre jedoch auch jeder andere gängige Werkstoff moderner Hochleistungsbohrer denkbar, wie z.B. Schnellstahl wie HSS oder HSSE, HSSEBM oder Sinter-Werkstoffe wie Keramik, Cermet u.ä.

Vorteilhaft dafür sind Hartstoffschichten, die vorzugsweise dünn ausgeführt sind, wobei die Dicke der Schicht vorzugsweise im Bereich zwischen 0,5 und 3 µm liegt. Für die Hartstoffschicht kommen sämtliche geeigneten Werkstoffe in Frage z.B. Diamant, vorzugsweise nanokristalliner Diamant, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann auch eine Verschleißschutzschicht zur Anwendung kommen, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau einlagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Die Schneidplatte 2 besteht aus Cermet oder einer anderen Hartkeramik und/ oder weist eine entsprechende Beschichtung beispielsweise Diamant oder kubisches Bornitrit auf.

Am Werkzeuggrundkörper bzw. Schneidenträger 3 ist dabei eine zentrische Bohrung 7 vorgesehen, in die ein weiteres Einsatzwerkzeug über fachnotorisch bekannte, nicht gezeigte Spannmittel - beispielsweise ein Hydrodehnspannfutter - einsparbar ist, so dass das Werkzeug als Stufenbohrer bzw. als Stufenreibahle einsetzbar ist.

Die Spannschraube 4 weist einen Spannkopf 40 auf, über den die Schneidplatte 2 gegen den Verstellkeil 12 gedrückt wird, wenn die Schraube 4 in die Bohrung 34 eingeschraubt wird. Es ist zu erkennen, dass in der durch die Schneidplatte 2 verlaufende Durchgangsbohrung ein Spiel gegenüber der Schraube 4 vorgesehen ist. Beim Einschrauben der Spannschraube 4 wirkt über den Spannkopf 40 eine Kraft auf die Innenseite der Schneidplatte 2, da die Bohrung 34 unter einem leichten Versatz zur Durchgangsbohrung in der Schneidplatte 2 angeordnet ist. Die Schneidplatte 2 wird dabei an ihrer Seitenwand 22 gegen eine Keilfläche 14 des Verstellkeils 12 gedrängt, wobei sich der Verstellkeil 12 wiederum an einer Abstützfläche 13 gegen den Schneidenträger 3 abstützt. Die Keilfläche 14 weist dabei einen Winkel ψ von etwa 7° zur Schraubenachse S auf. Der Winkel ψ entspricht dem Freiwinkel von Standard-Wechselschneidplatten, so dass eine flächige Anlage von derartigen Standard-Wechselschneidplatten gewährleistet ist. Die Schneidplatte 2 liegt dabei mit ihrer Bodenfläche 20 auf der Sitzfläche 30 des Schneidplattensitzes flächig auf.

Durch ein Verschieben des Verstellkeils 12 in Richtung durch die Blattebene in Figur 3 bzw. in Richtung V wird die Schneidplatte 2 nach Außen gedrängt, wobei die Schneidplatte 2 über den Spannkopf 40 ein Biegemoment auf die Schraube 4 ausübt. Durch Eindrehen der Madenschraube 10 erfolgt über einen Druckbolzen 10a eine Kraftübertragung auf den Antriebskeil 15. Dabei ist der Druckbolzen an seinem auf den Antriebskeil drückenden Ende entsprechend einer Führung im Antriebskeil randseitig etwas abgerundet, um eine gute Anlage zu gewährleisten. Somit kann eine Feinjustage der radialen Lage der Schneidplatte erfolgen, so dass das Werkzeug exakt auf das Nennmaß der Bohrung einstellbar ist. Beispielsweise wurden bei einem Werkzeug mit einem Durchmesser von 40 mm in einem Einstellbereich von +/- -0,05 mm Auflösungen < 1/100 mm erzielt.

Die Verstellung des Verstellkeils 12 erfolgt dabei über einen Verstellmechanismus bzw. eine Spann- und Justiervorrichtung, die in den Fig. 6 und 7 im einzelnen gezeigt ist. Die Druckschraube 10 ist dabei über einen Innensechskant 11 in den Schneidenträger bzw. Werkzeuggrundkörper einschraubbar und drückt dabei über den Druckkeil 10a auf eine Antriebskeilfläche 16 eines Antriebskeils 15, der an einem Doppelkeilstift 12, 15 zusammen mit dem Verstellkeil 12 ausgebildet ist. Bei einem Einschrauben der Druckschraube 10 gleitet der Doppelkeilstift 12, 15 entlang der abgeschrägten Druckfläche 19 des Druckkeils 10a bzw. der Antriebskeilfläche 16 in Verschieberichtung V, d.h. axial in Werkzeugrichtung A nach hinten bzw. nach rechts in Fig. 7, wodurch sich die Teilfläche 14 des Verstellkeils 12 um den Wert Δk in axialer Richtung verschiebt. Auf diese Weise wird die Schneidplatte um den Wert Δr nach außen verschoben.

Dabei weist die Antriebskeilfläche 16 einen Winkel β1 zur Verschieberichtung auf, die Verstellkeilfläche 14 einen Winkel α1. Der Winkel α1 beträgt dabei in der gezeigten Ausführungsform 15°, so dass die Kraftkomponente in Axialrichtung des Werkzeugs wesentlich größer ist, als die Kraftkomponente in Radialrichtung des Werkzeugs. Deshalb wird bei einem relativ großen Axialversatz Δk ein relativ kleiner Radialversatz Δr der Schneidplatte bewerkstelligt. Der Winkel β1 beträgt in der gezeigten Ausführungsform in etwa 35°, so dass eine im Bezug zur Eindrehbewegung der Druckschraube 10 und des Druckkeils 10a relativ kleine Verschiebebewegung des Doppelkeilstifts 12, 15 erfolgt, wodurch eine gleichmäßige Kraftübertragung auf die Seitenwand 22 der Schneidplatte 2 sichergestellt ist. Dabei wird der Axialversatz Δk aufgrund des geringen Winkels α1 nur zu einem geringen Teil in einen Radialversatz Δr der Schneidplatte umgewandelt, wodurch eine Feineinstellbarkeit der radialen Lage der Schneidplatte gewährleistet ist.

Um die Wendeplatte einzuspannen und zu justieren wird dabei wie folgt verfahren:

Beim Einlegen der Wechselschneidplatte 2 wird die Schraube 4 so weit angezogen, dass die Wendeschneidplatte 2 an ihren Seitenwänden 22 und 24 gegen den Verstellkeil 12 bzw. eine radiale Führungsfläche gedrängt wird, wie an dem Versatz Δv des Spannkopfs 40 in Fig. 7 zu erkennen ist. Anschließend erfolgt die Feineinstellung der Lage der Schneidplatte 2 über die Druckschraube 10. Nachdem die Schneidplatte 2 auf die gewünschte Endlage justiert ist, wird die Endlage über ein Nachziehen der Spannschraube 40 an der Torx-Aufnahme 41 fixiert. Zur Aufnahme des Dopppelkeilbolzens 12, 15 ist dabei eine Axialbohrung 33 im Schneidenträger 3 vorgesehen, zur Aufnahme der Druckschraube 10 eine radial dazu verlaufende Gewindebohrung 39, die sich zu einer dem Druckbolzen 10a entsprechenden Führungsaufnahme verengt. Zum erleichterten Austausch des Doppelkeilbolzens 12, 15 ist desweiteren eine Auswurffeder 18 in der Doppelkeilaufnahme 33 vorgesehen, die bei Lösen der Druckschraube 11 und Ausbau der Schneidplatte 2 den Doppelkeilstift 12, 15 aus seiner Aufnahme 33 herausdrückt.

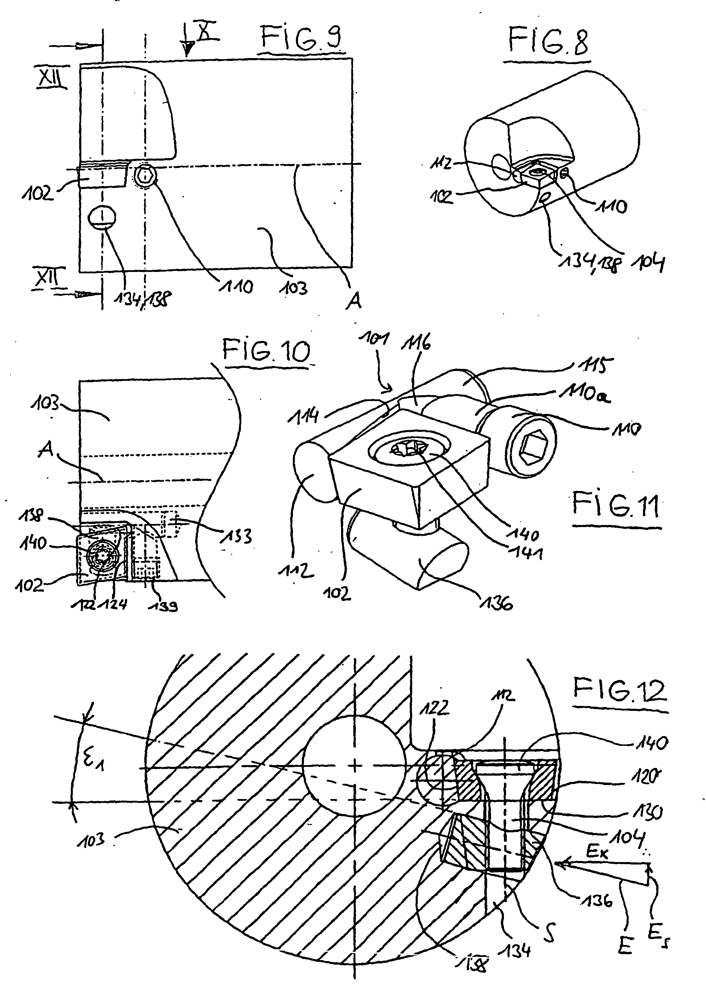

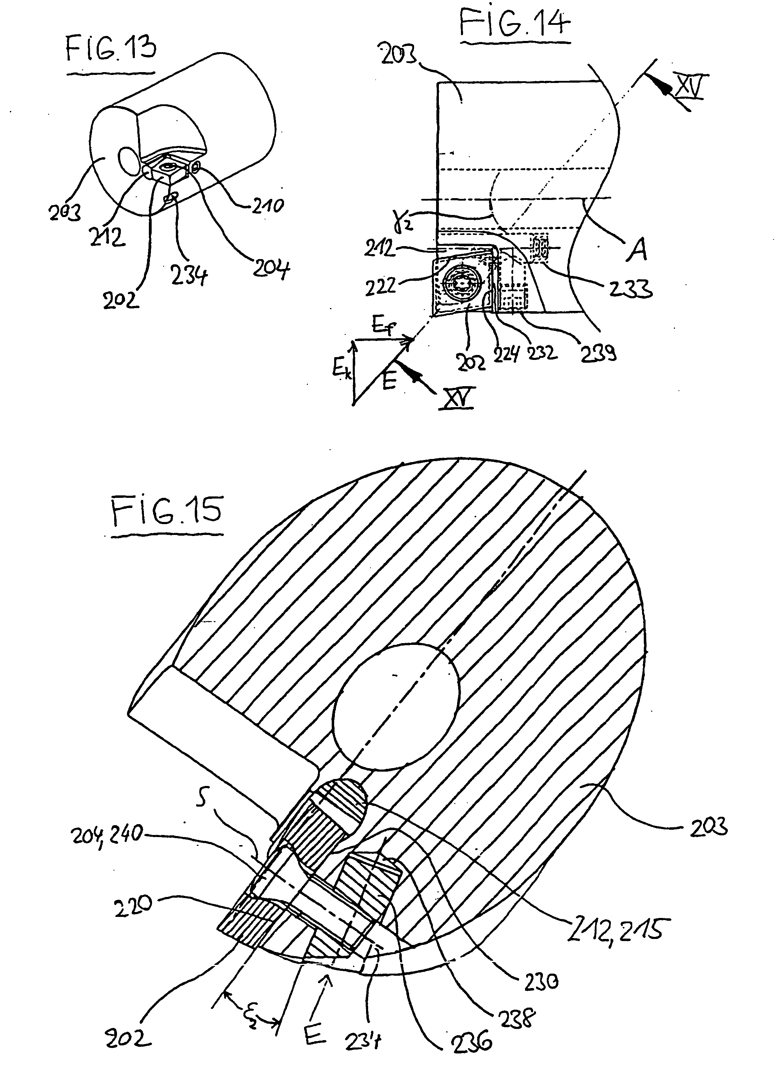

Die Fig. 8 bis 12 zeigen eine weitere Ausführungsform der Erfindung, wobei der Verstellmechanismus bzw. die Spann- und Justiervorrichtung um ein Mutterteil 136 ergänzt ist, mit dem die Spannschraube 104 zum Vorspannen und Fixieren der Schneidplatte 102 verschraubt ist. Das Mutterteil 136 ist dabei als Zylinderbolzen ausgebildet, der in einer Mutterteil-Führungsaufnhame 136 unterhalb der Schneidplatte (siehe Figs. 9 und 12) angeordnet ist. Die Mutterteil-Führungsaufnahme 138 verläuft dabei in der Ebene XII-XII in Fig. 9, die in Fig. 12 im Detail dargestellt ist in einer Richtung E, die um den Winkel ε1 zur Ebene der Sitzfläche 130 bzw. Bodenfläche 120 der Schneidplatte versetzt ist. Die Mutterteil-Führungsrichtung E hat daher eine Komponente Eₖ parallel zur Ebene der Sitzfläche 120 zur Keilfläche 122 des Verstellkeils 112 hin und eine Komponente Es in Richtung der Schraubenachse S der Spannschraube 104.

Beim Vorspannen der Schneidplatte 102 gegen die Sitzfläche 120 und die Keilfläche 122 wird die Spannschraube 104 in das Mutterteil 136 eingeschraubt, so dass der Spannkopf 140 der Spannschraube 104 die Schneidplatte 102 zum Verstellkeil 112 hin drängt. Beim anschließenden Justieren der Lage der Schneidplatte 102 über die Druckschraube 110 und den Doppelkeilstift 112 115 wird eine Kraft auf den Spannkopf 140 der Spannschraube 104 übertragen, die aber nicht mehr zu einer Biegebelastung der Spannschraube 104 führt, sondern zumindest teilweise zu einer Ausgleichsbewegung der Spannschraube mitsamt dem Mutterteil 136, wobei die Spannschraube 104 über die Klemmung zwischen Mutterteil 136 und dem Schraubenkopf 140 unter Zug gesetzt wird, anstatt auf Biegung belastet zu werden.

Dabei ist die Durchgangsbohrung zwischen Schneidplattensitz und Mutterteil 136 mit Spiel ausgelegt. Es hat sich gezeigt, dass auf diese Weise der Bereich, in dem eine Feinjustage über die Doppelkeilanordnung 101 möglich ist, wesentlich vergrößert werden kann. So konnten beispielsweise bei einem Werkzeugdurchmesser von 40 mm Werte in einem Bereich von -01,mm bis 0,35 mm mit der gezeigte Spann- und Justiervorrichtung 101 eingestellt werden, wobei gleichzeitig die erforderliche Klemmkraft zur sicheren Lagefixierung der Schneidplatte 102 gegeben war.

Noch größere Einstellbereiche lassen sich mit der in den Fig. 13 bis 15 gezeigten Ausführungsform der Erfindung erzielen, bei der die Spann- und Justiervorrichtung in weiten Teilen gleich den bisher gezeigten ist, wobei jedoch das Mutterteil 236 in einer Ebene XV-XV in Fig. 14 unter dem Winkel γ2 zur Werkzeugachse A in einer entsprechenden Führungsaufnahme 238 geführt ist. Neben der durch den Winkel ε2 vorgegebenen Komponente Eₛ in Richtung der Schraubenachse S weist die Mutterteil-Führungsrichtung E somit noch eine Komponente Eₖ radial zur Werkzeugachse A sowie eine Komponente E_{f} axial zur Werkzeugachse auf. Beim Anziehen der Spann- und Justiervorrichtung über die Druckschraube 210 erfolgt der durch das Mutterteil 236 bewerkstelligte Ausgleich somit nicht nur in Richtung zum Verstellkeil 212 hin, sondern auch in Richtung zur Führungsfläche 232.

Bei den bisher gezeigten Ausführungsformen waren die Antriebs- und Verstellkeilflächen 16, 14; 116, 114; 216, 214 jeweils konkav auf dem Doppelkeilstift der dortigen Spann- und Justiervorrichtungen angeordnet. Diese Ausbildung der Keilflächen ist zum Einsatz bei gängigen Wechsel- oder Wendeschneidplatten in Rautenform geeignet, die mit einer im wesentlichen radialen Hauptschneide (H in Fig. 1) in einer zur Werkzeugachse A parallelen Ebene angeordnet sind, da der Keilwinkel des Verstellkeils dann entsprechend der Rautenform so ausgelegt ist, dass der Doppelkeilstift der Spann- und Justiervorrichtung platzsparend in Axialrichtung A des Werkzeugs verläuft.

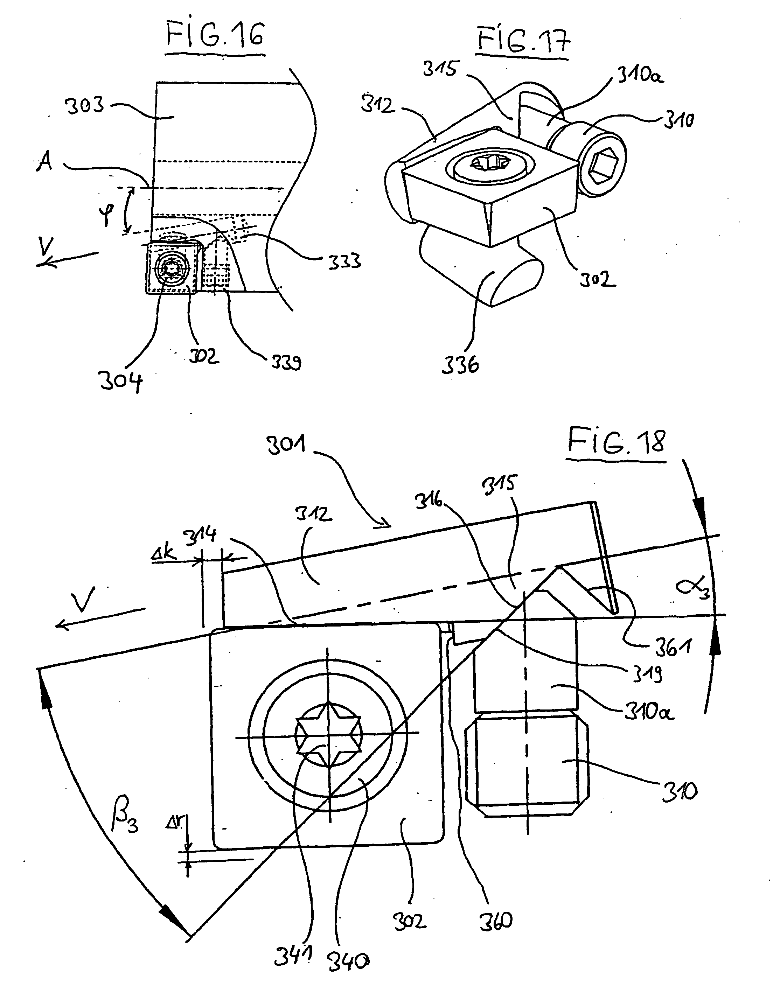

Die erfindungsgemäße Spann- und Justiervorrichtung ist jedoch für verschiedene Schneideinsatz- bzw. Schneidplattenbauformen und -Anordnungen auf dem Schneidenträger einsetzbar. So ist in den Fig. 16 bis 18 eine Ausführungsform der Erfindung gezeigt, bei der die Verstellkeilfläche 314 konvex zur Antriebskeilfläche 316 verläuft. Durch diese Anordnung wird eine kinematische Umkehr bewirkt, d. h., dass der Doppelkeil 312, 315 unter Druck der Druckschraube 310 bzw. des Druckbolzens 310a in Axialrichtung zur Werkzeugspitze hin wandert. Die Verschieberichtung V verläuft dabei unter dem Winkel ϕ zur Werkzeugachse A. Die Verschieberichtung wird vom gewünschten Winkel α3 zwischen Verschieberichtung und Keilfläche 314 sowie durch die Form und Lage der Schneidplatte 302 bestimmt. Während bei den bisher gezeigten Ausführungsformen rautenförmige Schneidplatten gewählt wurden, so dass sich bei geeignet gewähltem Keilwinkel (α1) eine Verschieberichtung parallel zur Werkzeugachse ergab, weist die Schneidplatte 302 eine im wesentlichen rechteckige Form auf, so dass der Winkel ϕ zwischen Werkzeugachse A und Verschieberichtung V dem Winkel α3 zwischen Verschieberichtung V und Keilfläche 314 entspricht.

Die Krafteinleitung an der abgeschrägten Lauffläche 319 der Druckschraube 310 erfolgt dabei unter dem Winkel β3 zur Verschieberichtung V des Doppelkeils 312, 315, die Kraftanleitung an der Keilfläche 314 des Verstellkeils 312 in die Schneidplatte 302 unter dem Winkel α3, so dass sich im wesentlichen die schon obenstehend beschriebenen Übersetzungsverhältnisse ergeben:

Bei einer relativ großen Keilverschiebung Δk wird ein relativ kleiner Radialversatz Δr der Schneidplatte 302 erzielt, so dass dieser Axialversatz Δr sehr fein einstellbar ist. Dabei wird die maximale Verschiebung des Doppelkeils 312, 315 durch einen Anschlag 360 begrenzt, der bei Erreichen der maximalen Verschiebung δk an die Schneidplatte 302 anschlägt, so dass der Bediener der Druckschraube 310 aufgrund des sprunghaft steigenden Widerstands beim Einschrauben ein Warnsignal erhält. An die Antriebskeilfläche 316 anschließend ist dabei ein zweiter Anschlag 361 vorgesehen, der die Bewegung des Doppelkeils 312, 315 letztlich vollends begrenzt.

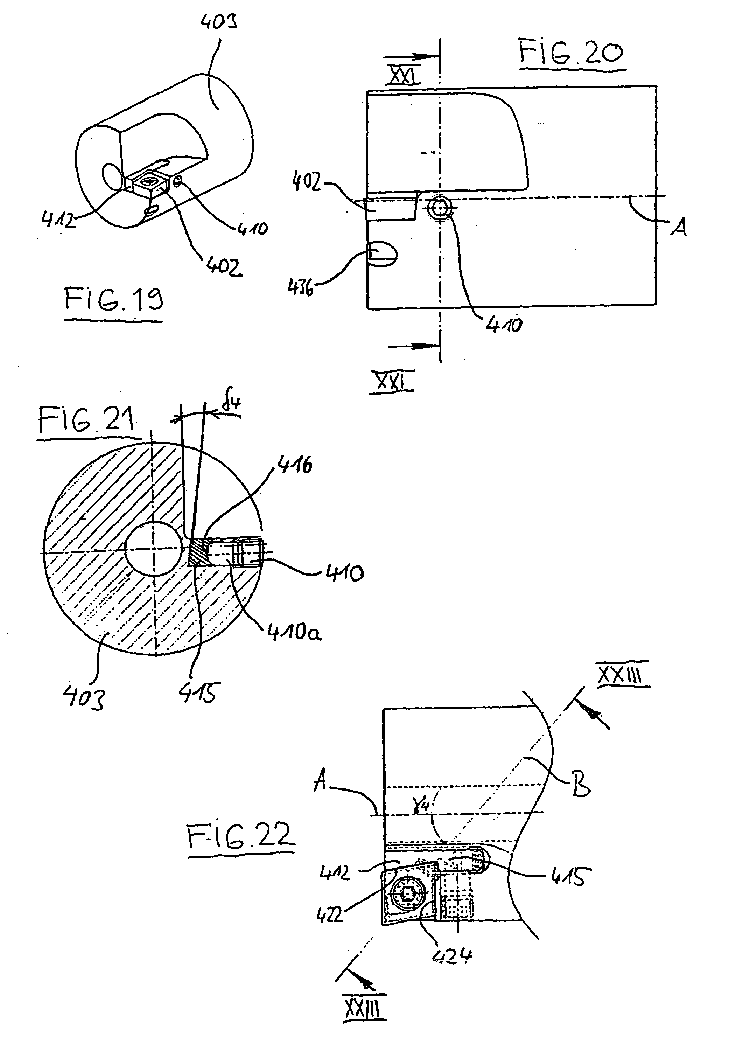

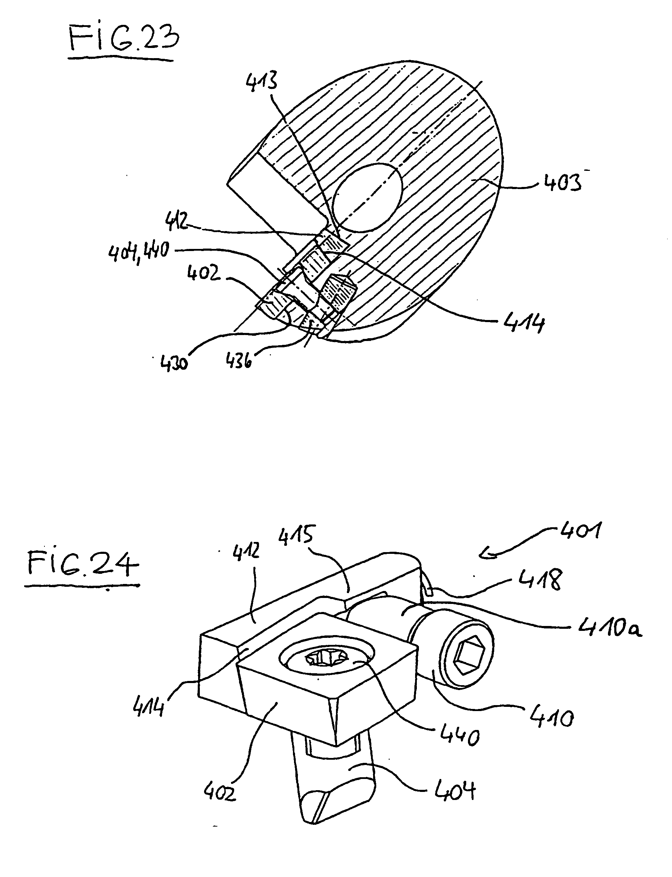

Bei den bisher gezeigten Ausführungsformen war der Doppelkeil 12, 15; 112, 115; 212, 215; 312, 315 als Zylinderbolzen ausgeführt, an dem für die Keile entsprechende Ausnehmungen ausgespart sind. Die Aufnahme 33; 133; 233; 333 konnte daher als zylindrische Bohrung ausgebildet sein, indem der Doppelkeil verliersicher und gegen den Werkzeugkörper abgestützt geführt ist. Eine Ausführungsform der erfindungsgemäßen Spann- und Justiervorrichtung mit einem Doppelkeil 412, 415 mit trapezförmigem Querschnitt wird in den Fig. 19 bis 24 gezeigt. Der Doppelkeilstift 412, 415 wird wiederum über eine Druckschraube 410 angetrieben, wodurch die rautenförmige Schneidplatte 402 in ihrer radialen Lage verstellbar ist. Als Führungsaufnahme für den Doppelkeil mit trapezförmigem Querschnitt (s. Fig. 21 und 23) ist dabei eine ausgefräste Nut vorgesehen, wobei der Verstellkeil 412 mit einer Verstellkeilfläche 414 gegen die Schneidplatte 402 drückt und sich über die Fläche 413 am Schneidenträger 403 abstützt, wobei die Fläche 414 unter dem durch die Schneidplatte vorgegebenen Freiwinkel nach innen geneigt ist und Fläche 413, mit der sich der Verstellkeil 412 am Schneidenträger abstützt, gegensinnig unter dem Winkel δ4, so dass zusammen mit der Druckschraube 410 eine Verliersicherung für den Doppelkeil gebildet wird.

Die Mutterteil-Führungsrichtung liegt dabei in einer diagonal durch die Schneidplatte verlaufenden Ebene XXIII-XXIII, die unter dem Winkel γ4 zur Werkzeugachse A versetzt ist, so dass die Schmalplatte 402 an ihren Seitenwänden 422, 424 gleichmäßig an die Verstellkeilfläche 414 und die radiale Führungsfläche gedrückt wird und die resultierende Belastung der Spannschraube 404 über das Mutterteil 436 zumindest teilweise in eine Zugbelastung umgewandelt werden kann. Bei gängigen Schneidplatten und -lagen beträgt der Winkel γ4 dabei beipielsweise 50°.

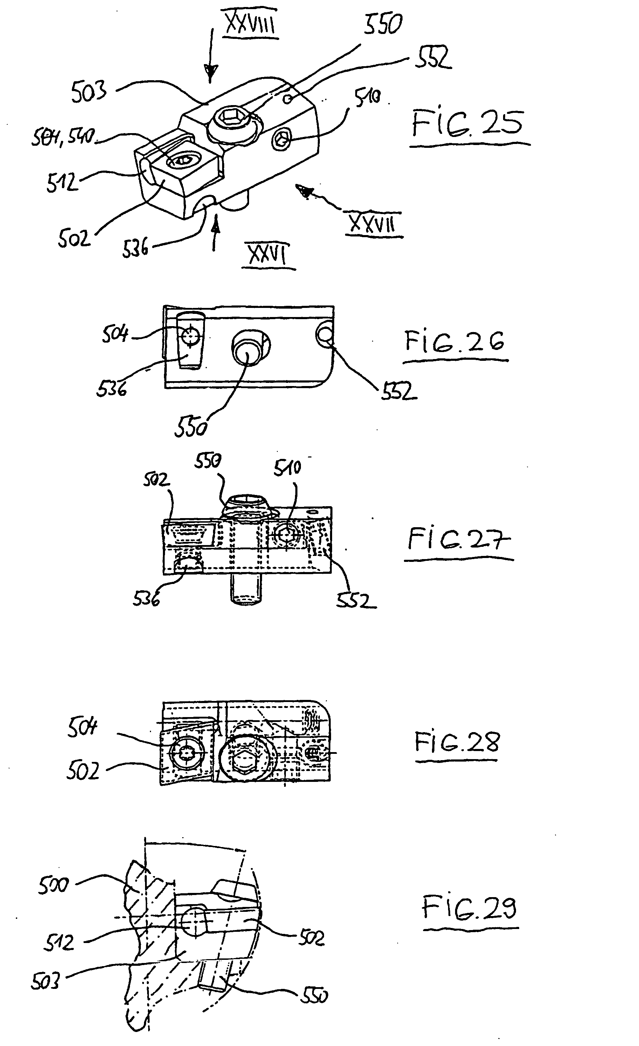

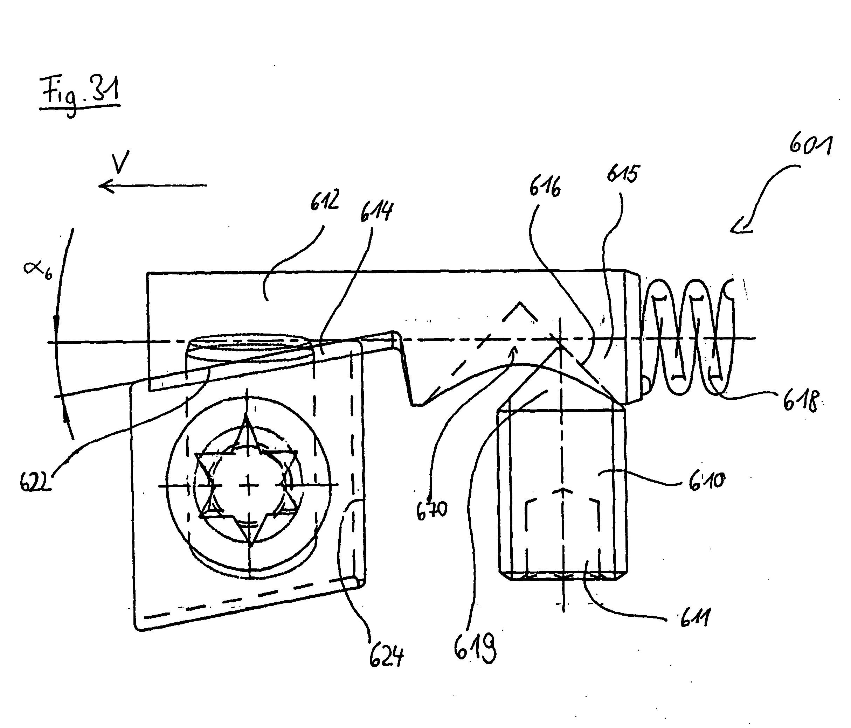

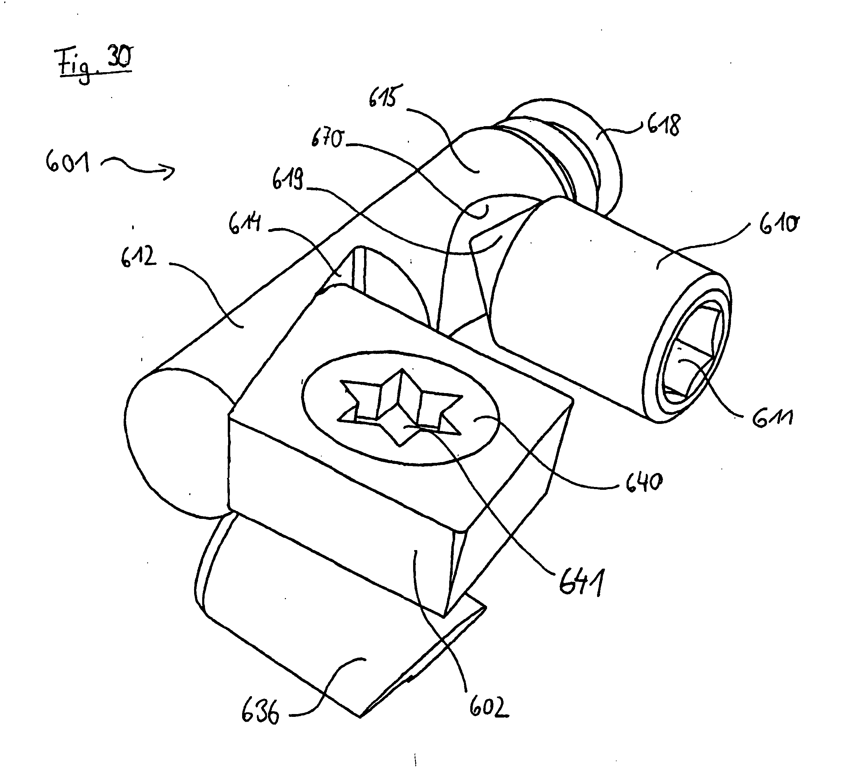

Im weiteren zeigen die Fig. 25 bis 29 eine Werkzeugkassette 503 zum Einbau an einem entsprechenden Zerspanungswerkzeug, beispielsweise einer Stufenreibahle. Die Werkzeugkassette 503 ist dabei über eine Spannschraube 550 gegen den Werkzeugkörper 500 (s. Fig. 29) vorspann- und fixierbar und trägt eine Schneidplatte 502, die analog der in den Fig. 9 bis 12 gezeigten Ausführungsformen mittels einer Druckschraube 510 über einen Doppelkeil mit einem Verstellkeil 512 einstellbar ist. Dabei ist ein Mutterteil 536 vorgesehen, über das die auf die Spannschraube 504 seitlich eingeleiteten Querkräfte ausgeglichen werden. Das Mutterteil 536 ist dabei unterseitig abgeflacht, so dass es in eine Aufnahme passt, die beim Einbau zwischen der Werkzeugkassette 503 und dem Werkzeugkörper entsteht.

Zusätzlich zur Spann- und Justiervorrichtung zur radialen Verstellung der Lage der Schneidplatte 502 auf der Werkzeugkassette 503 ist eine zweite Spann- und Justiervorrichtung 552 vorgesehen, mit der die axiale Lage der Kassette 503 gegenüber dem Schneidenträger eingestellt werden kann. Dabei kann durch die Bohrung 552 eine Druckschraube mit abgeschrägter Fläche eingeschraubt werden, die beispielsweise über einen entsprechenden Schiebekeil auf einen am Schneidenträger vorgesehenen Absatz drückt und somit die axiale Lage der Kassette 503 zum Werkzeugkörper 500 einstellt.

Schließlich zeigen die Fig. 30 und 31 eine weitere Ausführungsform der erfindungsgemäßen Spann- und Justiervorrichtung 601. Abweichend von den bisherigen Ausführungsformen kommt dabei eine als Madenschraube ausgestaltete Druckschraube 610 zum Einsatz, die an ihrer Stirnseite eine als Kegelmantelfläche gestaltete Druckfläche 619 aufweist. Der Antriebskeil 615 ist dabei Teil einer konischen Ausnehmung 670 auf dem Doppelkeilstift 612, 615. Auf diese Weise kann auf einen Druckkeil zwischen Druckschraube und Antriebskeil verzichtet werden. Der Konus der den Antriebskeil 615 bilenden Ausnehmung 670 hat dabei den gleichen Konuswinkel wie die kegelige Druckfläche 619, so dass die Druckfläche 619 beim Einschrauben der Druckschraube 610 zur Anlage an der linienförmigen Antriebskeilfläche 616, kommt und eine gute Kraftübertragung gewährleistet ist.

Im Rahmen der Erfindung sind selbstverständlich weitere, nicht gezeigte Abwandlungen möglich.

So könnte beispielsweise neben der radialen Verstelleinrichtung auch bei Werkzeugen ohne Werkzeugkassette eine zusätzliche axiale Verstelleinrichtung vorgesehen sein.

Ferner kann beispielsweise am Verstellkeil oder am Umfang der die Druckschraube aufnehmenden Bohrung eine Skala vorgesehen sein. Durch einen Abgleich mit einer entsprechenden Markierung am Schneidenträger bzw. auf der Druckschraube kann dann nach dem Messen der Lage der Schneidkante im vorgespannten Zustand abgelesen werden, wie weit die Spann- und Justiervorrichtung bis zum Erreichen der gewünschten Lage noch verstellt werden muss. Eine direkte Steuerung der Schneidkantenverstellung kann somit vorgenommen werden, die eine iterative Schneideneinstellung (Anziehen der Schraube, Messen der Schneidenverstellung an der Schneide, Nachziehen der Schraube usw.) ersetzt.

Die vorgestellte Spann- und Justiervorrichtung eingnet sich dabei ebenso wie das gezeigte Zerspanungswerkzeug und die gezeigte Werkzeugkassette insbesondere zum Einsatz bei Feinbearbeitungsaufgaben, die beispielsweise von Reibahlen vorgenommen werden, insbesondere bei Einsatz von Stufenreibahlen. Aber auch bei Bohrern, Fräsern oder Drehstählen, bei denen es besonders auf eine maßgenaue Zerspanung ankommt, ist die Erfindung vorteilhaft. Bei Werkzeugen, die mit mehreren Schneideinsätzen bestückt sind ist es dabei denkbar jeden oder beipielsweise nur einen der Schneideinsätze erfindungsgemäß auszustatten. Dabei ist auch eine zweiachsige Einstellung der Schneidenlage über zwei separate Spann- und Justiervorrichtungen an einem Schneideinsatz denkbar.

### Bezugszeichenliste

- Schneidenträger: (3; 103; 203; 303; 403; 503)
- Sitzfläche: (30; 130; 230; 330; 430; 530)
- Führungsfläche: (32; 132; 232; 332; 432; 532)
- Keilaufnahme: (133; 233; 333; 433; 533)
- Durchgangsbohrung: (34; 134; 234; 334; 434; 534)
- Mutterteil: (136; 236; 336; 436; 536; 636)
- Mutterteil-Aufnahme: (138; 238; 338; 438; 538)
- Axialbohrung: (39; 139; 239; 339; 439; 539)
- Spannschraube: (4; 104; 204; 304; 404; 504)
- Spannkopf: (40;- 140; 240; 340; 440; 540; 640)
- Torx: (41; 141; 641)

- Schneideinsatz: (2; 102; 202; 302; 402; 502; 602)
- Bodenfläche: (20; 120; 220; 320; 420; 520)
- erste Seitenwand: (22; 122; 222; 322; 422; 522; 622)
- zweite Seitenwand: (24; 124; 224; 324; 424; 524; 624)

- Spann- und Justiervorrichtung: (1; 101; 201; 301; 401; 501; 601)
- Druckschraube: (10; 110; 210; 310; 410; 510; 610)
- Druckbolzen: (10a; 110a; 310a; 410a)

- Innensechskant: (11; 611)
- Druckfläche: (19; 319)
- Doppelkeilstift: (12, 15; 112, 115; 212, 215; 312, 315; 412, 415; 512, 515; 612, 615)
- Verstellkeil: (12; 112; 212; 312; 412; 512; 612)
- Verstellkeilabstützfläche: (13; 113; 213; 313; 413; 513)
- Verstellkeilfläche: (14; 114; 214; 314; 414; 514; 614)
- Antriebskeil: (15; 115; 215; 315; 415; 515; 615)
- Antriebskeilfläche: (16; 116; 216; 316; 416; 516; 616)
- zweite Abstützfläche: (17)
- Auswurf-Feder: (18; 418; 618)
- Begrenzungsanschlag: (360)

- Kassette: (503)
- Kassettenträger: (500)
- Verschraubung 503 - 500: (550)
- Axialverstell.: (552)

- Werkzeugachse: (A)
- Nebenschneide: (N)
- Hauptschneide: (H)
- Verschieberichtung des Keils: (V)
- Mutterteil-Führungsrichtung: (E)
- Führungsrichtungskomponente zum Keil: (Eₖ)
- Führungsrichtungskomponente zur Schraube: (Eₛ)
- Führungsrichtungskomponente zur Führungsfläche: (E_{f})

- Verstellkeilwinkel: (α₁; α₃; α₆)
- Antriebskeilwinkel: (β₁; β₃)
- Winkel A - E in Ebene von 230; 430: (γ₂; γ₄)
- Winkel E - 130; 230 in Ebene XII; XV: (ε₁; ε₂)
- Winkel 415 - 403 im Werkeugquerschnitt: (δ₄)

- Spiel der vorspannschraube: (Δv)
- Verschiebung des Keils: (Δk)
- radialer Versatz der Schneidplatte: (Δr)

## Patentansprüche

1. Spann- und Justiervorrichtung (1; 101; 201; 301; 401; 501; 601) für ein Zerspanungswerkzeug mit einem Schneidenträger (3; 103; 203; 303; 403; 503), an dem ein plattenförmiger Schneideinsatz (2; 102; 202; 302; 402; 502; 602) mittels einer Vorspann- und Fixiereinrichtung (4; 104; 204; 304; 404; 504) mit seiner Bodenfläche (20; 120; 220; 320; 420; 520) gegen eine Sitzfläche (30; 130; 203; 330; 430; 530) derart vorspann- und fixierbar ist, dass er sich mit Seitenwandabschnitten (22, 24; 122, 124; 222, 224; 322, 324; 422, 424; 522, 524; 622, 624) lagefixiert am Schneidenträger (3; 103; 203; 303; 403; 503) abstützt, mit:
einem im Schneidenträger (3; 103; 203; 303; 403; 503) formschlüssig und verschiebbar anzuordnenden, in einer im Wesentlichen parallel zur Sitzfläche (30; 130; 230; 330; 430; 530) verlaufenden Richtung (v) antreibbaren Verstellkeil (12; 112; 212; 312; 412; 512; 612), über den sich der Schneideinsatz (2; 102; 202; 302; 402; 502; 602) abstützen und verstellen lässt, und
einer den Verstellkeil (12; 112; 212; 312; 412; 512; 612) antreibenden Druckschraube (10; 110; 210; 310; 410; 510; 610), **dadurch gekennzeichnet, dass**
die Spann- und Justiervorrichtung (1; 101; 201; 301; 401; 501; 601) weiterhin einen Antriebskeil aufweist, über den der Verstellkeil (12; 112; 212; 312; 412; 512; 612) antreibbar ist,
die Druckschraube (10; 110; 210; 310; 410; 510; 610) im Winkel zum Verstellkeil (12; 112; 212; 312; 412; 512; 612) auf den Antriebskeil (15; 115; 215; 315; 415; 515; 615) wirkt, und
der Verstellkeil (12; 112; 212; 312; 412; 512; 612) und der Antriebskeil (15; 115; 215; 315; 415; 515; 615) als Ausnehmungen an einem Doppelkeilstift (12, 15; 112, 115; 212, 215; 312, 315; 412, 415; 512, 515; 612, 615) ausgebildet sind.

2. Spann- und Justiervorrichtung (1; 101; 201; 301; 401; 501; 601) nach Anspruch 1, **dadurch gekennzeichnet, dass** der Schneideinsatz (2; 102; 202; 302; 402; 502; 602) über einen Spannkopf (40; 140; 240; 340; 440; 540; 640) durch die Vorspann- und Fixiervorrichtung (4; 104; 204; 304; 404; 504) mit einem ersten Seitenwandabschnitt (22; 122; 222; 322; 422; 522; 622) gegen eine Verstellkeilfläche (14; 114; 214; 314; 414; 514; 614) des Verstellkeils (12; 112; 212; 312; 412; 512; 612) drückbar ist.

3. Spann- und Justiervorrichtung (1; 101; 201; 301; 401; 501; 601) nach Anspruch 1 oder 2, **dadurch gekennzeichnet, dass** der Schneideinsatz (2; 102; 202; 302; 402; 502; 602) über einen Spannkopf (40; 140; 240; 340; 440; 540; 640) im geschlossenen Zustand der Vorspann- und Fixiervorrichtung (4; 104; 204; 304; 404; 504) mit einem im Winkel zum ersten Seitenwandabschnitt (22; 122; 222; 322; 422; 522; 622) ausgebildeten zweiten Seitenwandabschnitt (24; 124; 224; 324; 424; 524) gegen eine Führungsanschlagsanordnung drückend vorspann- und fixierbar ist, insbesondere gegen eine Führungsfläche (32; 132; 232; 332; 432; 532) am Schneidenträger (3; 103; 203; 303; 403; 503).

4. Spann- und Justiervorrichtung (1; 101; 201; 401; 501; 601) nach Anspruch 3, **dadurch gekennzeichnet, dass** eine spitzwinklige Ecke des Schneideinsatzes (2; 102; 202; 402; 502; 602) von der Verstellkeilfläche (14; 114; 214; 414; 514; 614) und der Führungsfläche (32; 132; 232; 432; 532) eingefasst ist, an denen sich die Seitenwände der Schneidplatte im wesentlichen vollflächig abstützen, wobei die Verschieberichtung (V) des Verstellkeils (12; 112; 212; 412; 512; 612) maximal 75° von der Axialrichtung (A) abweicht, vorzugsweise um einen Winkel (ϕ) von maximal 15° oder gleich der Axialrichtung (A) des Werkzeugs ist.

5. Spann- und Justiervorrichtung (1; 101; 201; 301; 401; 501; 601) nach einem der vorhergehenden Ansprüche, **dadurch gekennzeichnet, dass** zwischen der Verstellkeilfläche (14; 114; 214; 314; 414; 514; 614) und der Antriebsrichtung (V) des Verstellkeils (12; 112; 212; 312; 412; 512; 612) ein Keilwinkel (α₁; α₃; α₆) zwischen 1° und 50°, insbesondere zwischen 5° und 25° vorgesehen ist.

6. Spann- und Justiervorrichtung (1; 101; 201; 301; 401; 501; 601) nach einem der Ansprüche 1 bis 5, **dadurch gekennzeichnet, dass** die Druckschraube (10; 110; 210; 310; 410; 510; 610) vom Werkzeugumfang her im wesentlichen radial zur Werkzeugachse (A) hin verläuft.

7. Spann- und Justiervorrichtung (1; 101; 201; 301; 401; 501) nach einem der Ansprüche 1 bis 6, **dadurch gekennzeichnet, dass** die Ausnehmungen am Doppelkeilstift (12, 15; 112, 115; 212, 215; 312, 315; 412, 415; 512, 515; 612, 615) keilförmig ausgeformt sind.

8. Spann- und Justiervorrichtung (601) nach Anspruch 6, **dadurch gekennzeichnet, dass** der Antriebskeil (619) durch eine konische Ausnehmung (670) gebildet wird.

9. Spann- und Justiervorrichtung (601) nach Anspruch 7, **dadurch gekennzeichnet, dass** die Druckschraube (610) eine stirnseitige Druckfläche (619) aufweist, die kegelmantelförmig ausgebildet ist, so dass die Druckschraube (610) drehbar an ihrer Druckfläche (619) am Antriebskeil (615) anliegt.

10. Spann- und Justiervorrichtung (601) nach Anspruch 9, **dadurch gekennzeichnet, dass** der Kegelwinkel der Druckfläche (619) dem Kegelwinkel der konischen Ausnehmung (670) entspricht, so dass die Druckschraube (610) linienförmig an einer Antriebskeilfläche (616) anliegt.

11. Spann- und Justiervorrichtung (1) nach einem der Ansprüche 6 bis 8, **dadurch gekennzeichnet, dass** die Druckschraube (10; 110; 210; 310; 410; 510) stirnseitig auf einen koaxial geführten Druckkeil (10a; 110a; 310a; 410a) drückbar ist, der eine Druckfläche (19; 319) zur Druckübertragung auf die Antriebskeilfläche (16; 116; 316; 416) des Antriebskeils (15; 115; 215; 315; 415; 515) aufweist.

12. Spann- und Justiervorrichtung (1) nach Anspruch 11, **dadurch gekennzeichnet, dass** die Druckfläche (19; 319) am Druckkeil (10a; 110a; 310a; 410a) derart an die Antriebskeilfläche (16; 116; 316; 416) angepasst ist, das sie flächig anliegt.

13. Spann- und Justiervorrichtung (1; 101; 201; 401; 501; 601) nach einem der Ansprüche 1 bis 12, **dadurch gekennzeichnet, dass** der Verstellkeilwinkel (α₁; α₃; α₆) kleiner als der Antriebskeilwinkel (β₁; β₃) ist.

14. Spann- und Justiervorrichtung (1; 101; 201; 401; 501; 601) nach einem der Ansprüche 1 bis 13, **dadurch gekennzeichnet, dass** die Verstellkeilfläche (14; 114; 214; 414; 514; 614)und die Antriebskeilfläche (16; 116; 216; 416; 516; 616) konkav am Doppelkeilstift (12, 15; 112, 115; 212, 215; 412, 415; 512, 515; 612, 615) vorgesehen sind.

15. Spann- und Justiervorrichtung (301) nach einem der Ansprüche 1 bis 13, **dadurch gekennzeichnet, dass** die Verstellkeilfläche (314) und die Antriebskeilfläche (316) konvex am Doppelkeilstift (312, 315) vorgesehen sind.

16. Spann- und Justiervorrichtung (1; 101; 201; 301; 501) nach einem der Ansprüche 1 bis 15, **dadurch gekennzeichnet, dass** der Doppelkeilstift (12, 15; 112, 115; 212, 215; 412, 415; 512, 515) als Zylinderbolzen ausgebildet ist und in einer entsprechenden Keilaufnahmebohrung (133; 233; 333; 533) angeordnet ist.

17. Spann- und Justiervorrichtung (401) nach einem der Ansprüche 1 bis 15, **dadurch gekennzeichnet, dass** der Doppelkeilstift (412, 415) als Bolzen mit trapezförmigem Querschnitt ausgebildet ist, der senkrecht zur sitzfläche (430) gesichert in einer entsprechenden Keilaufnahme (438) angeordnet ist.

18. Spann- und Justiervorrichtung (1; 401; 601) nach einem der vorhergehenden Ansprüche, **gekennzeichnet durch** eine Auswurffeder (18; 418; 618), deren Federkraft entgegen der Verschieberichtung (V) gegen den Verstellkeil (12; 412; 612) wirkt.

19. spann- und Justiervorrichtung (401) nach einem der vorhergehenden Ansprüche, **gekennzeichnet durch** einen Begrenzungsanschlag (361), der die maximale Verschiebung (Δk) des Verstellkeils (312) begrenzt.

20. Zerspanungswerkzeug, insbesondere drehangetriebenes Zerspanungswerkzeug, mit zumindest einer Spann- und Justiervorrichtung (101; 201; 301; 401; 501) nach einem der Ansprüche 1 bis 22, wobei ein plattenförmiger Schneideinsatz (102; 202; 302; 402; 502) mittels einer Spannschraube (104; 204; 304; 404; 504) mit seiner Bodenfläche (120; 220; 320; 420; 520) gegen eine Sitzfläche (130; 230; 330; 430; 530) derart vorspann- und fixierbar ist, dass er sich mit einem ersten Seitenwandabschnitt (122; 222; 322; 422; 522) lagefixiert an einer Fläche (114; 214; 314; 414; 514) der Spann- und Justiervorrichtung (101; 201; 301; 401; 501) abstützt, **dadurch gekennzeichnet, dass** die Spannschraube (104; 204; 304; 404; 504) durch eine Durchgangsbohrung (134; 234; 334; 434; 534) hindurch mit einem Mutterteil (136; 236; 336; 436; 536) verschraubbar-ist, das im Schneidenträger (103; 203; 303; 403; 503) in einer Mutterteil-Führungsaufnahme (138; 238; 338; 438; 538) mit einem Freiheitsgrad in einer Mutterteil-Führungsrichtung (E) verschiebbar gelagert ist, welche eine Komponente (Eₖ) senkrecht zum ersten Seitenwandabschnitt (122; 222; 322; 422; 522) aufweist.

21. Zerspanungswerkzeug nach Anspruch 20, **dadurch gekennzeichnet, dass** die Mutterteil-Führungsaufnahme (138; 238; 338; 438; 538) eine in Mutterteil-Führungsrichtung (E) vom Außenumfang des Schneidenträgers (103; 203; 303; 403; 503) aus eingebrachte Bohrung (103; 203; 303; 403; 503) ist und das Mutterteil (136; 236; 336; 436; 536) ein in der Bohrung verschiebbarer Stift (136; 236; 336; 436; 536)

22. Zerspanungswerkzeug nach Anspruch 20 oder 21, **dadurch gekennzeichnet, dass** sich der Schneideinsatz (202; 402) an einem zweiten Seitenwandabschnitt (224; 424) an einer Führungsfläche (232; 432) abstützt, wobei die Führungsrichtung (E) eine Komponente (E_{f}) senkrecht zum zweiten Seitenwandabschnitt (224; 424) aufweist.

23. Zerspanungswerkzeug nach Anspruch 21, **dadurch gekennzeichnet, dass** die Mutterteil-Führungsaufnahme (238; 438) zu einer spitzwinkligen Ecke des Schneideinsatzes (202; 402) hin verläuft, die vom ersten (222; 422) und zweiten Seitenwandabschnitt (224; 424) eingefasst wird.

24. Zerspanungswerkzeug nach einem der Anspräche 20 bis 23, **dadurch gekennzeichnet, dass** die Führungsrichtung (E) eine Komponente (Eₛ) in Richtung der Achse (S) der Spannschraube (104; 204; 304; 404; 504) aufweist.

25. Zerspanungswerkzeug nach einem der Ansprüche 20 bis 24, **gekennzeichnet durch** ein Verhältnis der Komponente (Eₛ) in Richtung der Achse (S) der Spannschraube (104; 204; 304; 404; 504) zu den restlichen Komponenten (Eₖ, E_{f}) der Führungsrichtung (E) von 10 - 50%, insbesondere 20 - 35%, beispielsweise 25 - 30 %

26. Zerspanungswerkzeug nach einem der Ansprüche 20 bis 25, **gekennzeichnet durch** seine Ausgestaltung als Stufenwerkzeug, wobei die einzustellende Schneidplatte (102; 202; 302; 402; 502) an der Stufe vorgesehen ist.

27. Werkzeugkassette (503) mit einer Spann- und Justiervorrichtung (501) nach einem der Ansprüche 1 - 22, zum Einbau in ein Zerspanungswerkzeug, insbesondere nach einem der Ansprüche 23 bis 29, wobei ein plattenförmiger Schneideinsatz (502) mittels einer Vorspann- und Fixiervorrichtung (504), insbesondere einer Spannschraube (504), mit seiner Bodenfläche (520) gegen eine Sitzfläche (530) derart vorspann- und fixierbar ist, dass er sich mit Seitenwandabschnitten (522, 524) lagefixiert an der Kassette (503) abstützt, **gekennzeichnet durch** einen mittels einer Druckschraube (510) antreibbaren Verstellkeil (512), der in der Werkzeugkassette (503) formschlüssig und verschiebbar aufgenommenen ist, über den sich der Schneideinsatz (502) mit einem ersten Seitenwandabschnitt (522) abstützt.

28. Werkzeugkassette (503) nach Anspruch 27, **gekennzeichnet durch** eine Spannschraube (550) zum lagebestimmten Fixieren der Werkzeugkassette (503) auf dem Werkzeug (500).

29. Werkzeugkassette (503) nach Anspruch 27, **gekennzeichnet durch** eine zweite Spann- und Justiervorrichtung (552), mit der die axiale Lage der Werkzeugkassette (503) auf dem Werkzeug (500) eingestellt werden kann.

## Claims

1. A clamping and adjustment apparatus (1; 101; 201; 301; 401; 501; 601) for a cutting tool, with a cutter support (3; 103; 203; 303; 403; 503) on which a plate-shaped cutter insert (2; 102; 202; 302; 402; 502; 602) is prestressable and fastenable by means of a prestressing and fastening device (4; 104; 204; 304; 404; 504) with its bottom surface (20; 120; 220; 320; 420; 520) against a seat surface (30; 130; 230; 330; 430; 530) such that it is supported by lateral wall sections (22, 24; 122, 124; 222, 224; 322, 324; 422, 424; 522, 524; 622, 624) in a positionally fixed manner on the cutter support (3; 103; 203; 303; 403; 503), comprising:
an adjustment wedge (12; 112; 212; 312; 412; 512; 612), to be accommodated in the cutter support (3; 103; 203; 303; 403; 503) in a form-fitted and
displaceable manner, which can be actuated in a direction (V) that extends essentially parallel to the seat surface (30; 130; 230; 330; 430; 530) and
whereby the cutter insert (2; 102; 202; 302; 402; 502; 602) is supported and adjusted, and
a pressure screw (10; 110; 210; 310; 410; 510; 610) for actuating the adjustment wedge (12; 112; 212; 312; 412; 512; 612), **characterized in that**
the clamping and adjustment apparatus (1; 101; 201; 301; 401; 501; 601) moreover includes an actuation wedge whereby the adjustment wedge (12; 112; 212; 312; 412; 512; 612) may be actuated,
the pressure screw (10; 110; 210; 310; 410; 510; 610) acts on the actuation wedge (15; 115; 215; 315; 415; 515; 615) at an angle to the adjustment wedge (12; 112; 212; 312; 412; 512; 612), and
the adjustment wedge (12; 112; 212; 312; 412; 512; 612) and the actuation wedge (15; 115; 215; 315; 415; 515; 615) are formed as recesses on a double wedge pin (12, 15; 112, 115; 212, 215; 312, 315; 412, 415; 512, 515; 612, 615).

2. The clamping and adjustment apparatus (1; 101; 201; 301; 401; 501; 601) according to claim 1, **characterized in that** the cutter insert (2; 102; 202; 302; 402; 502; 602) is pressable by means of a grip head (40; 140; 240; 340; 440; 540; 640) by the prestressing and fastening device (4; 104; 204; 304; 404; 504) with a first lateral wall section (22; 122; 222; 322; 422; 522; 622) against an adjustment wedge surface (14; 114; 214; 314; 414; 514; 614) of the adjustment wedge (12; 112; 212; 312; 412; 512; 612).

3. The clamping and adjustment apparatus (1; 101; 201; 301; 401; 501; 601) according to claim 1 or 2, **characterized in that** the cutter insert (2; 102; 202; 302; 402; 502; 602) is pressingly prestressable and fastenable by means of a grip head (40; 140; 240; 340; 440; 540; 640) in the closed state of the prestressing and fastening device (4; 104; 204; 304; 404; 504) with a second lateral wall section (24; 124; 224; 324; 424; 524) formed at an angle to the first lateral wall section (22; 122; 222; 322; 422; 522; 622) against a guide stop arrangement, in particular against a guide surface (32; 132; 232; 332; 432; 532) on the cutter support (3; 103; 203; 303; 403; 503).

4. The clamping and adjustment apparatus (1; 101; 201; 401; 501; 601) according to claim 3, **characterized in that** an acute corner of the cutter insert (2; 102; 202; 402; 502; 602) is bordered by the adjustment wedge surface (14; 114; 214; 414; 514; 614) and the guide surface (32; 132; 232; 432; 532) on which the lateral walls of the cutting plate are supported essentially all over, the actuation direction (V) of the adjustment wedge (12; 112; 212; 412; 512; 612) deviating maximally by 75° from the axial direction (A), preferably by an angle (ϕ) of maximally 15° or being equal to the axial direction (A) of the tool.

5. The clamping and adjustment apparatus (1; 101; 201; 301; 401; 501; 601) according to one of the preceding claims, **characterized in that** between the adjustment wedge surface (14; 114; 214; 314; 414; 514; 614) and the actuation direction (V) of the adjustment wedge (12; 112; 212; 312; 412; 512; 612), a wedge angle (α₁; α₃; α₆) of between 1° and 50°, particularly between 5° and 25°, is provided.

6. The clamping and adjustment apparatus (1; 101; 201; 301; 401; 501; 601) according to one of claims 1 to 5, **characterized in that** the pressure screw (10; 110; 210; 310; 410; 510; 610) extends from the tool perimeter essentially radially towards the tool axis (A).

7. The clamping and adjustment apparatus (1; 101; 201; 301; 401; 501) according to one of claims 1 to 6, **characterized in that** the recesses on the double wedge pin (12, 15; 112, 115; 212, 215; 312, 315; 412, 415; 512, 515; 612, 615) are formed to be wedge-shaped.

8. The clamping and adjustment apparatus (601) according to claim 6, **characterized in that** the actuation wedge (619) is formed by a conical recess (670).

9. The clamping and adjustment apparatus (601) according to claim 7, **characterized in that** the pressure screw (610) has a front-side pressure surface (619) which is formed to be conical surface-shaped so that the pressure screw (610) abuts rotatably on its pressure surface (619) on the actuation wedge (615).

10. The clamping and adjustment apparatus (601) according to claim 9, **characterized in that** the cone angle of the pressure surface (619) corresponds to the cone angle of the conical recess (670) so that the pressure screw (610) abuts in a line shape on an actuation wedge surface (616).

11. The clamping and adjustment apparatus (1) according to one of claims 6 to 8, **characterized in that** the pressure screw (10; 110; 210; 310; 410; 510) is pressable on the front side on a coaxially guided pressure wedge (10a; 110a; 310a; 410a) which has a pressure surface (19; 319) for pressure transfer to the actuation wedge surface (16; 116; 316; 416) of the actuation wedge (15; 115; 215; 315; 415; 515).

12. The clamping and adjustment apparatus (1) according to claim 11, **characterized in that** the pressure surface (19; 319) on the pressure wedge (10a; 110a; 310a; 410a) is adapted to the actuation wedge surface (16; 116; 316; 416) such that it abuts two-dimensionally.

13. The clamping and adjustment apparatus (1; 101; 201; 401; 501; 601) according to one of claims 1 to 12, **characterized in that** the adjustment wedge angle (α₁; α₃; α₆) is smaller than the actuation wedge angle (β₁; β₃).

14. The clamping and adjustment apparatus (1; 101; 201; 401; 501; 601) according to one of the claims 1 to 13, **characterized in that** the adjustment wedge surface (14; 114; 214; 414; 514; 614) and the actuation wedge surface (16; 116; 216; 416; 516; 616) are provided concavely an the double wedge pin (12, 15; 112, 115; 212, 215; 412, 415; 512, 515; 612, 615).

15. The clamping and adjustment apparatus (301) according to one of claims 1 to 13, **characterized in that** the adjustment wedge surface (314) and the actuation wedge surface (316) are provided convexly on the double wedge pin (312, 315).

16. The clamping and adjustment apparatus (1; 101; 201; 301; 501) according to one of claims 1 to 15, **characterized in that** the double wedge pin (12, 15; 112, 115; 212, 215; 412, 415; 512, 515) is formed as a cylinder pin and is arranged in a corresponding wedge receptacle drill hole (133; 233; 333; 533).

17. The clamping and adjustment apparatus (401) according to one of claims 1 to 15, **characterized in that** the double wedge pin (412, 415) is arranged as a pin with a trapezoidal cross-section, which is arranged perpendicularly to the seat surface (430) secured in a corresponding wedge receptacle (438).

18. The clamping and adjustment apparatus (1; 401; 601) according to one of the preceding claims, **characterized by** an ejection spring (18; 418; 618) whose spring force acts contrary to the displacement direction (V) against the adjustment wedge (12; 412; 612).

19. The clamping and adjustment apparatus (401) according to one of the preceding claims, **characterized by** a limiting stop (361) which limits the maximum displacement (Δk) of the adjustment wedge (312).

20. A cutting tool, in particular a rotationally driven cutting tool, with at least one clamping and adjustment apparatus (101; 201; 301; 401; 501) according to one of claims 1 to 22, wherein a plate-shaped cutter insert (102; 202; 302; 402; 502) is prestressable and fastenable by means of a tension screw (104; 204; 304; 404; 504) with its bottom surface (120; 220; 320; 420; 520) against a seat surface (130; 230; 330; 430; 530) such that it is supported by a first lateral wall section (122; 222; 322; 422; 522) in a positionally fixed manner on a surface (114; 214; 314; 414; 514) of the clamping and adjustment apparatus (101; 201; 301; 401; 501), **characterized in that** the tension screw (104; 204; 304; 404; 504) is screwed down through a through hole (134; 234; 334; 434; 534) with a nut part (136; 236; 336; 436; 536) which is displaceably supported in the cutter support (103; 203; 303; 403; 503) in a nut part guide receptacle (138; 238; 338; 438; 538) with a degree of freedom in a nut part guide direction (E) which has a component (Eₖ) perpendicular to the first lateral wall section (122; 222; 322; 422; 522).

21. The cutting tool according to claim 20, **characterized in that** the nut part guide receptacle (138; 238; 338; 438; 538) is a drill hole (103; 203; 303; 403; 503) introduced in nut part guide direction (E) from out of the outer circumference of the cutter support (103; 203; 303; 403; 503), and the nut part (136; 236; 336; 436; 536) is a pin (136; 236; 336; 436; 536) which is displaceable in the drill hole.

22. The cutting tool according to claim 20 or 21, **characterized in that** the cutter insert (202; 402) is supported on a second lateral wall section (224; 424) on a guide surface (232; 432), the guide direction (E) having a component (E_{f}) perpendicular to the second lateral wall section (224; 424).

23. The cutting tool according to claim 21, **characterized in that** the nut part guide receptacle (238; 438) extends towards an acute corner of the cutter insert (202; 402) which is bordered by the first lateral wall section (222; 422) and the second lateral wall section (224; 424).

24. The cutting tool according to one of the claims 20 to 23, **characterized in that** the guide direction (E) has a component (E_{S}) in the direction of the axis (S) of the tension screw (104; 204; 304; 404; 504).

25. The cutting tool according to one of the claims 20 to 24, **characterized by** a ratio of the component (E_{S}) in the direction of the axis (S) of the tension screw (104; 204; 304; 404; 504) to the remaining components (Eₖ, E_{f}) of the guide direction (E) of 10 - 50%, in particular 20 - 35%, for instance 25 - 30%.

26. The cutting tool according to one of the claims 20 to 25, **characterized by** its configuration as a step tool, the cutting plate (102; 202; 302; 402; 502) to be set being provided on the step.

27. A tool cartridge (503) including a clamping and adjustment apparatus (501) according to one of claims 1 to 22, for installation in a cutting tool in particular according to one of claims 23 to 29, wherein a plate-shaped cutter insert (502) is prestressable and fastenable by means of a prestressing and fastening apparatus (504), particularly a tension screw (504), with its bottom surface (520) against a seat surface (530) such that it is supported by lateral wall sections (522, 524) in a positionally fixed manner on the cartridge (503), **characterized by** an adjustment wedge (512) which is actuated by means of a pressure screw (510), said adjustment wedge (512) being accommodated in the tool cartridge (503) in a form-fitted and displaceable manner by which the cutter insert (502) is supported by a first lateral wall section (522).

28. The tool cartridge (503) according to claim 27, **characterized by** a tension screw (550) for positionally determined fastening of the tool cartridge (503) on the tool(500).

29. The tool cartridge (503) according to claim 27, **characterized by** a second clamping and adjustment apparatus (552) whereby the axial position of the tool cartridge (503) is set on the tool (500).

## Revendications

1. Dispositif de serrage et d'ajustement (1 ; 101 ; 201 ; 301 ; 401 ; 501 ; 601) pour un outil d'enlèvement de matière, comportant un porte-lame (3 ; 103 ; 203 ; 303 ; 403 ; 503) dans lequel un insert de lame en forme de plaque (2 ; 102 ; 202 ; 302 ; 402 ; 502 ; 602) peut être précontraint et fixé au moyen d'un dispositif de précontrainte et de fixation (4 ; 104 ; 204 ; 304 ; 404 ; 504) avec sa surface de fond (20, 120 ; 220 ; 320 ; 420 ; 520) contre une surface d'assise (30 ; 130 ; 230 ; 330 ; 430 ; 530) de manière à s'appuyer avec des tronçons de paroi latérale (22, 24 ; 122, 124 ; 222, 224 ; 322, 324 ; 422, 424 ; 522, 524 ; 622, 624) en position fixe sur le porte-lame (3 ; 103 ; 203 ; 303 ; 403 ; 503), comprenant :
- une clavette de réglage (12 ; 112 ; 212 ; 312 ; 412 ; 512 ; 612) adaptée pour être agencée dans le porte-lame (3 ; 103 ; 203 ; 303 ; 403 ; 503) avec coopération de formes et avec faculté de translation et pouvant être entraînée dans une direction (V) qui s'étend essentiellement parallèlement à la surface d'assise (30 ; 130 ; 230 ; 330 ; 430 ; 530), et via laquelle l'insert de lame (2 ; 102 ; 202 ; 302 ; 402 ; 502 ; 602) peut s'appuyer et être ajusté ; et
- une vis de pression (10, 110 ; 210 ; 310 ; 410 ; 510 ; 610) qui entraîne la clavette de réglage (12 ; 112 ; 212 ; 312 ; 412 ; 512 ; 612),
**caractérisé en ce que** :
- le dispositif de serrage et d'ajustement (1 ; 101 ; 201 ; 301 ; 401 ; 501 ; 601) présente en outre une clavette d'entraînement au moyen de laquelle la clavette de réglage (12 ; 112 ; 212 ; 312 ; 412 ; 512 ; 612) peut être entraînée ;
- la vis de pression (10, 110 ; 210 ; 310 ; 410 ; 510 ; 610) agit de manière inclinée par rapport à la clavette de réglage (12 ; 112 ; 212 ; 312 ; 412 ; 512 ; 612) sur la clavette d'entraînement (15 ; 115 ; 215 ; 315 ; 415 ; 515 ; 615) ; et
- la clavette de réglage (12 ; 112 ; 212 ; 312 ; 412 ; 512 ; 612) et la clavette d'entraînement (15 ; 115 ; 215 ; 315 ; 415 ; 515 ; 615) sont réalisées comme des creux sur une goupille à double clavette (12, 15 ; 112, 115 ; 212, 215 ; 312, 315 ; 412, 415 ; 512, 515 ; 612, 615).

2. Dispositif de serrage et d'ajustement (1 ; 101 ; 201 ; 301 ; 401 ; 501 ; 601) selon la revendication 1, **caractérisé en ce que** l'insert de lame (2 ; 102 ; 202 ; 302 ; 402 ; 502 ; 602) peut être pressé contre une surface (14 ; 114 ; 214 ; 314 ; 414 ; 514 ; 614) de la clavette de réglage (12 ; 112 ; 212 ; 312 ; 412 ; 512 ; 612) au moyen d'une tête de serrage (40 ; 140 ; 240 ; 340 ; 440 ; 540 ; 640) à travers le dispositif de précontrainte et de fixation (4 ; 104 ; 204 ; 304 ; 404 ; 504) avec un premier tronçon de paroi latérale (22 ; 122 ; 222 ; 322 ; 422 ; 522 ; 622).

3. Dispositif de serrage et d'ajustement (1 ; 101 ; 201 ; 301 ; 401 ; 501 ; 601) selon la revendication 1 ou 2, **caractérisé en ce que** l'insert de lame (2 ; 102 ; 202 ; 302 ; 402 ; 502 ; 602) peut être fixé et précontraint sous pression contre un ensemble de butées de guidage, en particulier contre une surface de guidage (32 ; 132 ; 232 ; 332 ; 432 ; 532) sur le porte-lame (3 ; 103 ; 203 ; 303 ; 403 ; 503), au moyen d'une tête de serrage (40 ; 140 ; 240 ; 340 ; 440 ; 540 ; 640) dans l'état fermé du dispositif de précontrainte et de fixation (4 ; 104 ; 204 ; 304 ; 404 ; 504) avec un second tronçon de paroi latérale (24 ; 124 ; 224 ; 324 ; 424 ; 524) disposé de manière inclinée par rapport au premier tronçon de paroi latérale (22 ; 122 ; 222 ; 322 ; 422 ; 522 ; 622).

4. Dispositif de serrage et d'ajustement (1 ; 101 ; 201 ; 401 ; 501 ; 601) selon la revendication 3, **caractérisé en ce qu'**un coin à angle aigu de l'insert de lame (2 ; 102 ; 202 ; 402 ; 502 ; 602) est bordé par la surface (14 ; 114 ; 214 ; 414 ; 514 ; 614) de la clavette de réglage et par la surface de guidage (32 ; 132 ; 232 ; 432 ; 532), sur lesquelles les parois latérales de la plaque de coupe s'appuient essentiellement sur toute la surface, la direction de translation (V) de la clavette de réglage (12 ; 112 ; 212 ; 412 ; 512 ; 612) s'écartant au maximum de 75° par rapport à la direction axiale (A), de préférence d'un angle (ϕ) de 15° maximum, ou étant égale à la direction axiale (A) de l'outil.

5. Dispositif de serrage et d'ajustement (1 ; 101 ; 201 ; 301 ; 401 ; 501 ; 601) selon l'une des revendications précédentes, **caractérisé en ce qu'**un angle de clavette (α₁ ; α₃ ; α₆) compris entre 1° et 50°, en particulier entre 5° et 25°, est prévu entre la surface (14 ; 114 ; 214 ; 314 ; 414 ; 514 ; 614) de la clavette de réglage et la direction d'entraînement (V) de la clavette de réglage (12 ; 112 ; 212 ; 312 ; 412 ; 512 ; 612).

6. Dispositif de serrage et d'ajustement (1 ; 101 ; 201 ; 301 ; 401 ; 501 ; 601) selon l'une des revendications 1 à 5, **caractérisé en ce que** la vis de pression (10, 110 ; 210 ; 310 ; 410 ; 510 ; 610) s'étend essentiellement radialement depuis la périphérie de l'outil vers l'axe d'outil (A).

7. Dispositif de serrage et d'ajustement (1 ; 101 ; 201 ; 301 ; 401 ; 501) selon l'une des revendications 1 à 6, **caractérisé en ce que** les creux sur la goupille à double clavette (12, 15 ; 112, 115 ; 212, 215 ; 312, 315 ; 412, 415 ; 512, 515 ; 612, 615) sont conformés en forme de clavette.

8. Dispositif de serrage et d'ajustement (601) selon la revendication 6, **caractérisé en ce que** la clavette d'entraînement (615) est réalisée par un creux conique (670).

9. Dispositif de serrage et d'ajustement (601) selon la revendication 7, **caractérisé en ce que** la vis de pression (610) présente une surface de pression frontale (619) qui est réalisée en forme d'enveloppe de cône, de sorte que la vis de pression (610) vient au contact de la clavette d'entraînement (615) sur sa surface de pression (619) avec faculté de rotation.

10. Dispositif de serrage et d'ajustement (601) selon la revendication 9, **caractérisé en ce que** l'angle au sommet du cône de la surface de pression (619) correspond à l'angle au sommet du cône du creux conique (670) de sorte que la vis de pression (610) vient au contact linéairement d'une surface (616) de la clavette d'entraînement.

11. Dispositif de serrage et d'ajustement (1) selon l'une des revendications 6 à 8, **caractérisé en ce que** la vis de pression (10 ; 110 ; 210 ; 310 ; 410 ; 510) peut être pressée par la face frontale sur une clavette de pression guidée coaxialement (10a ; 110a ; 310a ; 410a) qui présente une surface de pression (19 ; 319) pour transmettre la pression sur la surface (16 ; 116 ; 316 ; 416) de la clavette d'entraînement (15 ; 115 ; 215 ; 315 ; 415 ; 515).

12. Dispositif de serrage et d'ajustement (1) selon la revendication 11, **caractérisé en ce que** la surface de pression (19 ; 319) de la clavette de pression (10a ; 110a ; 310a ; 410a) est adaptée à la surface (16 ; 116 ; 316 ; 416) de la clavette d'entraînement de manière à s'appliquer en surface.

13. Dispositif de serrage et d'ajustement (1 ; 101 ; 201 ; 401 ; 501 ; 601) selon l'une des revendications 1 à 12, **caractérisé en ce que** l'angle (α₁ ; α₃ ; α₆) de la clavette de réglage est plus petit que l'angle (β₁ ; β₃) de la clavette d'entraînement.

14. Dispositif de serrage et d'ajustement (1 ; 101 ; 201 ; 401 ; 501 ; 601) selon l'une des revendications 1 à 13, **caractérisé en ce que** la surface (14 ; 114 ; 214 ; 414 ; 514 ; 614) de la clavette de réglage et la surface (16 ; 116 ; 216 ; 416 ; 516 ; 616) de la clavette d'entraînement sont prévues avec une forme concave sur la goupille à double clavette (12, 15 ; 112, 115 ; 212, 215 ; 412, 415 ; 512, 515 ; 612, 615).

15. Dispositif de serrage et d'ajustement (301) selon l'une des revendications 1 à 13, **caractérisé en ce que** la surface (314) de la clavette de réglage et la surface (316) de la clavette d'entraînement sont prévues avec une forme convexe sur la goupille à double clavette (312, 315).

16. Dispositif de serrage et d'ajustement (1 ; 101 ; 201 ; 301 ; 501) selon l'une des revendications 1 à 15, **caractérisé en ce que** la goupille à double clavette (12, 15 ; 112, 115 ; 212, 215 ; 412, 415 ; 512, 515) est réalisée comme goujon cylindrique et est agencée dans un perçage de logement de clavette correspondant (133 ; 233 ; 333 ; 533).

17. Dispositif de serrage et d'ajustement (401) selon l'une des revendications 1 à 15, **caractérisé en ce que** la goupille à double clavette (412, 415) est réalisée comme goujon à section transversale trapézoïdale qui est agencé de manière non détachable dans un logement de clavette correspondant (433) perpendiculairement à la surface d'assise (430).

18. Dispositif de serrage et d'ajustement (1 ; 401 ; 601) selon l'une des revendications précédentes, **caractérisé par** un ressort d'éjection (18 ; 418 ; 618) dont la force de ressort agit contre la clavette de réglage (12 ; 412 ; 612) à l'encontre de la direction de déplacement (V).

19. Dispositif de serrage et d'ajustement (401) selon l'une des revendications précédentes, **caractérisé par** une butée de limitation (361) qui limite le déplacement maximal (Δk) de la clavette de réglage (312).

20. Outil d'enlèvement de matière, en particulier outil d'enlèvement de matière entraîné en rotation, comportant au moins un dispositif de serrage et d'ajustement (101 ; 201 ; 301 ; 401 ; 501) selon l'une des revendications 1 à 19, dans lequel un insert de lame en forme de plaque (102 ; 202 ; 302 ; 402 ; 502) peut être précontraint et fixé avec sa surface de fond (120 ; 220 ; 320 ; 420 ; 520) contre une surface d'assise (130 ; 230 ; 330 ; 430 ; 530) au moyen d'une vis de serrage (104 ; 204 ; 304 ; 404 ; 504) de manière à s'appuyer avec un premier tronçon de paroi latérale (122 ; 222 ; 322 ; 422 ; 522) avec fixation en longueur sur une surface (114 ; 214 ; 314 ; 414 ; 514) du dispositif de serrage et d'ajustement (101 ; 201 ; 301 ; 401 ; 501), **caractérisé en ce que** la vis de serrage (104 ; 204 ; 304 ; 404 ; 504) peut être vissée à travers un perçage traversant (134 ; 234 ; 334 ; 434 ; 534) avec une pièce formant écrou (136 ; 236 ; 336 ; 436 ; 536) qui est montée en translation dans le porte-lame (103 ; 203 ; 303 ; 403 ; 503) dans un logement de guidage de pièce formant écrou (138 ; 238 ; 338 ; 438 ; 538) avec un degré de liberté dans une direction de guidage (B) de la pièce formant écrou, laquelle présente une composante (Eₖ) perpendiculaire au premier tronçon de paroi latérale (122 ; 222 ; 322 ; 422 ; 522).

21. Outil d'enlèvement de matière selon la revendication 20, **caractérisé en ce que** le logement de guidage (138 ; 238 ; 338 ; 438 ; 538) de la pièce formant écrou est un perçage rapporté dans une direction de guidage (E) de la pièce formant écrou depuis la périphérie extérieure du porte-lame (103 ; 203 ; 303 ; 403 ; 503) et la pièce formant écrou (136 ; 236 ; 336 ; 436 ; 536) est une goupille (136 ; 236 ; 336 ; 436 ; 536) déplaçable dans le perçage.

22. Outil d'enlèvement de matière selon la revendication 20 ou 21, **caractérisé en ce que** l'insert de lame (202 ; 402) s'appuie sur un second tronçon de paroi latérale (224 ; 424) sur une surface de guidage (232 ; 432), dans lequel la direction de guidage (E) présente une composante (E_{f}) perpendiculaire au second tronçon de paroi latérale (224 ; 424).

23. Outil d'enlèvement de matière selon la revendication 21, **caractérisé en ce que** le logement de guidage (238 ; 438) de la pièce formant écrou s'étend vers un coin à angle aigu de l'insert de lame (202 ; 402) qui est bordé par le premier tronçon de paroi latérale (222 ; 422) et par le second tronçon de paroi latérale (224 ; 424).

24. Outil d'enlèvement de matière selon l'une des revendications 20 à 23, **caractérisé en ce que** la direction de guidage (E) présente une composante (Eₛ) en direction de l'axe (S) de la vis de serrage (104 ; 204 ; 304 ; 404 ; 504).

25. Outil d'enlèvement de matière selon l'une des revendications 20 à 24, **caractérisé en ce qu'**un rapport entre la composante (Eₛ) en direction de l'axe (S) de la vis de serrage (104 ; 204 ; 304 ; 404 ; 504) et les composantes restantes (Eₖ, E_{f}) de la direction de guidage (E) est de 10 à 50%, en particulier de 20 à 35%, par exemple de 25 à 30%.

26. Outil d'enlèvement de matière selon l'une des revendications 20 à 25, **caractérisé par** sa conformation comme outil étagé, dans lequel la plaque de coupe devant être ajustée (102 ; 202 ; 302 ; 402 ; 502) est prévue sur l'étage.

27. Cassette d'outil (503) comportant un dispositif de serrage et d'ajustement (501) selon l'une des revendications 1 à 26, pour le montage dans un outil d'enlèvement de matière, en particulier selon l'une des revendications 23 à 26, dans lequel un insert de lame en forme de plaque (502) peut être précontraint et fixé au moyen d'un dispositif de précontrainte et de fixation (504), en particulier une vis de serrage (504), avec sa surface de fond (520) contre une surface d'assise (530) de manière à s'appuyer avec des tronçons de paroi latérale (522, 524) en position fixe sur la cassette (503), **caractérisée par** une clavette de réglage (512) pouvant être entraînée au moyen d'une vis de pression (510) et qui est logée en translation avec coopération de formes dans la cassette d'outil (503) et sur laquelle s'appuie l'insert de lame (502) avec un premier tronçon de paroi latérale (522).

28. Cassette d'outil (503) selon la revendication 27, **caractérisée par** une vis de serrage (550) pour fixer de manière déterminée la position de la cassette d'outil (503) sur l'outil (500).

29. Cassette d'outil (503) selon la revendication 27, **caractérisée par** un second dispositif de serrage et d'ajustement (552) avec lequel il est possible d'ajuster la position axiale de la cassette d'outil (503) sur l'outil (500).
